# EUROPÄISCHE PATENTSCHRIFT

(11) **EP 3 372 133 B1**
(45) Veröffentlichungstag und Bekanntmachung des Hinweises auf die Patenterteilung: **24.08.2022**
(21) Anmeldenummer: 18160404.2
(22) Anmeldetag: 07.03.2018
(51) Int. Cl.: A47K 3/00

(54) **DICHT- UND MONTAGEBAND-ANORDNUNG**
SEALING AND MOUNTING TAPE ASSEMBLY
ENSEMBLE DE BANDE DE MONTAGE ET D'ÉTANCHÉITÉ

(30) Priorität: 11.03.2017 EP 17000397
(43) Veröffentlichungstag der Anmeldung: 12.09.2018
(73) Patentinhaber: Sanipat GmbH, 6045 Meggen (CH)
(72) Erfinder: GASSMANN, Urs, 6343 Buonas (CH)
(74) Vertreter: Prins Intellectual Property AG

(56) Entgegenhaltungen:
- EP-A1- 3 132 729
- EP-A2- 2 385 087
- US-A1- 2016 198 907

## Beschreibung

### Technisches Gebiet

Die vorliegende Erfindung betrifft eine Dicht- und Montageband-Anordnung, wie sie insbesondere beim Setzen bzw. Anschliessen eines Einbaugegenstands wie z.B. eine Dusch-, Whirl- oder Badewanne an mindestens eine Anschlusswand oder an mindestens einen Anschlussboden oder an beides oder an mindestens einen Wandübergang oder Kombinationen hiervon Verwendung findet. Die Erfindung betrifft des Weiteren ein Verfahren zur Montage der Dusch- oder Badewanne an mindestens eine Anschlusswand oder an mindestens einen Anschlussboden oder an beides oder an mindestens einen Wandübergang oder an Kombinationen hiervon, bzw. eine Verwendung der Dicht- und Montageband-Anordnung.

### Technischer Hintergrund

Solche Wannendichtbänder sind hinlänglich bekannt und weisen üblicherweise im Querschnitt einen Dicht- und Montageband-Grundkörper bzw. Trägermaterial auf, der bzw. das einen ersten, unteren Bereich mit einer Vorder- bzw. wannenseitigen Klebefläche ausbildet und einen zweiten, oberen Bereich mit einer rück- bzw. wandseitigen Klebefläche.

Insbesondere in den Eckbereichen, also beim Setzen einer Wanne in ein Eck gebildet aus einer ersten und einer zweiten Anschlusswand, stellt sich jedoch das Problem, dass die Wannenecke abgerundet ist und die Eckkante zwischen der ersten und der zweiten Anschlusswand nicht. Um diesen, sowieso wegen Feuchtigkeitseinbruchs besonders gefährdeten Eckbereich dicht zu bekommen, werden beispielsweise Eckfüllprofile eingesetzt und mitverklebt.

EP3132729 A1 offenbart eine Dicht- und Montageband-Anordnung nach dem Oberbegriff des Anspruchs 1.

Nachteilig ist hierbei, dass beim Einbau zusätzliche Arbeiten anfallen und der Sanitärfachmann oder Fliesen- bzw. Plattenleger für das Erreichen eines dichten und optisch ansprechenden Endergebnisses gefordert ist oder sogar vor Ort improvisieren muss.

Die Gebrauchsmusterschrift DE202011004003 U1 beschreibt zur verbesserten Abdichtung der Eckbereiche zwischen zwei Anschlusswänden ein Dichtband mit einem unelastischen ersten, unteren Bereich, dort erster Längsabschnitt genannt, sowie einem zweiten, oberen Bereich bzw. Längsabschnitt, der (nur) in Längsrichtung dehnbar ist. Mit Längsrichtung ist die waagerechte Erstreckungsrichtung des Dichtbandes gemeint. Dieses wird gemäss einer ersten Ausgestaltungsvariante durch unterschiedliche Dichtband- Materialien erreicht und gemäss einer zweiten. Ausgestaltungsvariante durch mehrfach in parallelen Reihen angeordnete, senkrechte Schwächungen oder Einschnitte oder Löcher, welche die Dehnbarkeit des oberen Bereichs in Längsrichtung ergeben.

Bei der ersten Ausgestaltungsvariante ist nachteilig, dass exakt in demjenigen Bereich, wo das Dichtband am dichtesten und strapazierfähigsten sein soll, eine Trennnaht zwischen zwei unterschiedlichen Materialien besteht. Bei der zweiten beschriebenen Ausgestaltungsvariante mit Schwächungen, Einschnitten oder Löchern ist hingegen nachteilig, dass der obere Bereich nur in Längsrichtung dehnbar ist, weil auch eine Dehnbarkeit in Quer- und beliebige andere Richtungen wünschenswert wäre, um die Überbrückung des Eckbereichs dicht und vor allem spannungsfrei zu realisieren. Des Weiteren, sofern Einschnitte und Löcher nur in einem Deckmaterial oder Vlies vorgesehen sein sollten, klafft dann Butyl oder anderes Klebematerial oder Stoffe frei heraus, das oder die mit dem Silikon der abschliessenden Fuge chemische Reaktionen eingehen könnten, was wiederum einer langanhaltenden Dichtigkeit nicht zuträglich ist.

Eckbereiche resp. Übergänge zwischen einer Anschlusswand und einem Anschlussboden oder Eckbereiche zwischen zwei Anschlussböden können jedoch mit der Lösung aus DE202011004003 nicht abgedichtet werden. Um solche Eckbereich, wie auch die Eckbereiche zwischen zwei Anschlusswänden, verlässlich abzudichten, werden an die Eckbereiche angepasste oder anpassbare Abdichtprofile verwendet, wie sie beispielsweise in CH705339B oder CH704155 beschrieben sind.

### Darstellung der Erfindung

Die Aufgabe der vorliegenden Erfindung ist, eine Dicht- und Montageband-Anordnung zu stellen, die die oben genannten Kriterien auf verbesserte Weise erfüllt. Nachteile bekannter Dichtband-Anordnungen sollen wenn möglich komplett oder weitgehend eliminiert sein.

Diese Aufgabe wird durch eine Dicht- und Montageband-Anordnung mit den Merkmalen des Anspruchs 1 gelöst. Die Lösung der Aufgabe besteht zunächst in der Konzeption bzw. Anordnung mindestens eines Dicht- und Montageband-Grundkörpers bzw. Trägermaterials, das aus einem beliebig in jede Richtung derart dehn- und verformbaren Material besteht oder ein solches umfasst, dass die Dicht- und Montageband-Anordnung nach Befestigung des ersten, unteren Bereichs entlang oder um eine Ecke der Abbordung (oder Aufbordung) der zweite, obere Bereich in beliebige Richtung vom Einbaugegenstand weg dehnbar und an oder in Eckbereichen der Anschlusswand und/oder des Anschlussbodens befestigbar ist. In dem für die vorgesehene Verwendung erforderlichen Dehnungsbereich, insbesondere zum Setzen von Einbaugegenständen, ist der Dicht- und Montageband-Grundkörper bzw. das Trägermaterial derart reissfest, dass eine zuverlässige Dichtung gewährleistet ist. Eine solche Dicht- und Montageband-Anordnung ist in beliebige Richtung, d.h. Längs- und Querrichtung, über Ecken und Kanten dehn- und verformbar.

Dabei ist mit Trägermaterial der Grundkörper der Dicht- und Montageband-Anordnung gemeint, welcher im Wesentlichen die Grundstruktur des Bandes bildet, auf welcher Elemente wie Schnittschutzstreifen oder -bänder, Schallschutzstreifen oder -bänder, Kapillarschutzstreifen, Klebebänder oder -flächen, Abdeckbänder oder -folien, Vliese, textile Flächengebilde oder Armierungsbänder angeordnet oder befestigt sind. Diese zusätzlichen Elemente können auf dem Grundkörper resp. Trägermaterial vormontiert sein oder als Bausatz in einem Set zusammen mit dem Dicht- und Montageband-Grundkörper verpackt sein, so dass verschiedene Element je nach Bedarf auf dem Dicht- und Montageband-Grundkörper angeordnet werden können. Bevorzugt ist bereits der Dicht- und Montagband-Grundkörper bzw. das Trägermaterial luft- und/oder wasserdicht.

In einigen Ausführungsformen kann der Dicht- und Montagband-Grundkörper bzw. das Trägermaterial aus plastisch dehn- und verformbarem Material bestehen und eine durchgehend-einstückige, einbaugegenstandseitig resp. wannenseitig mindestens an dem zweiten, oberen Bereich angeordnete Deckfolie kann ebenfalls plastisch dehn- und verformbar sein.

In einigen Ausführungsformen kann das in beliebige Richtung dehn- und verformbare Material elastische sein, wobei die einbaugegenstandseitige Klebefläche und die wandseitige Klebefläche eine genügende Haftung auf dem Einbaugegenstand resp. auf der/dem Anschlusswand/-boden aufweisen, um im eingebauten Zustand der durch die Elastizität entstehenden Rückstellkraft entgegenzuwirken. Mit anderen Worten soll die Haftung so gross sein, dass auch ein stark gedehnter, elastischer Grundkörper sich nicht lediglich aufgrund der im Einbauzustand entstehenden Rückstellkräfte von der Bade- oder Duschwanne resp. der Anschlusswand oder dem Anschlussboden löst. Eine geeignete Haftzugfestigkeitswerte auf PVC-U kann beispielsweise mehr als 0.150 N/mm2 (Messung nach IFT-Richtlinie MO-01/0) betragen.

In einigen Ausführungsform kann das in beliebige Richtung dehn- und verformbare Material eine Dehnbarkeit (z.B. nach EN12311-1) in Quer- und Längsrichtung von mindestens 200 %, vorzugsweise 500 % - 1200 %, weiter vorzugsweise etwa 1000 % aufweisen. Damit ist gewährleistet, dass zumindest der obere, zweite Bereich weit um Ecken und Kanten gezogen und gedehnt werden kann, ohne dass das Trägermaterial reisst. Bevorzugt ist der Dicht- und Montagband-Grundkörper aus einem hoch dehn- und verformbaren Acrylatband gefertigt, welches beispielsweise eine Dicke von 0.5 bis 2.5 mm, bevorzugt 0.8 bis 1.2 mm, aufweisen kann. Ein solches Band ist in beliebige Richtung, d.h. Längs- und Querrichtung, dehn- und verformbar.

In einigen Ausführungsformen kann an dem ersten, unteren Bereich einbaugegenstandseitig resp. wannenseitig mindestens ein Klebe-Streifen angeordnet sein und/oder die wand- oder bodenseitigen Klebefläche des Dichtund Montagband-Grundkörpers bzw. des Trägermaterials kann vollflächig über dem zweiten, oberen Bereich angeordnet sein und optional auch den ersten, unteren Bereich abdecken.

In einigen Ausführungsformen kann der Dicht- und Montagband-Grundkörper bzw. das Trägermaterial in einem oder mehreren Bereichen eine die Dehnund Verformbarkeit einschränkende Kaschierung, z.B. eine Vlieskaschierung aufweisen und nur in einem Teilbereich in beliebige Richtung dehn- und verformbar ist.

Dieses Material des Dicht- und Montageband-Grundkörpers kann beispielsweise auch ein spezielles Butyl-Band oder ein spezielles Schaumstoff- oder ein Gummi- oder gummiertes Band sein, oder aber auch ein sonstiges Klebeband mit diesen beschriebenen Eigenschaften. Das Material selbst kann selbstklebend sein und somit würde es keine separaten Klebeflächen mehr benötigen, die auf einem Trägermaterial appliziert sind. Ein plastisch dehnbzw. verformbares, nicht selbstklebendes Trägermaterial hingegen, auf das dann aber ebenfalls plastisch dehn- bzw. verformbare Klebeflächen bzw. - schichten appliziert sind, soll ebenfalls in der Offenbarung der vorliegenden Anmeldung inkludiert sein, auch wenn es sich bei Testversuchen als schwierig herausgestellt hatte, geeignete Materialien für das Trägermaterial und die Klebeflächen bzw. -schichten zu finden, sodass die plastische Dehn- bzw. Verformbarkeit in beliebigen Richtungen bei gleichzeitiger Vermeidung von Rissen in den Klebeflächen bzw. - schichten gewährleistet ist.

Des Weiteren kann eine erfindungsgemässe Dicht- und Montageband-Anordnung eine Deckfolie umfassen, die mindestens in dem oberen Bereich oder aber auch im unteren Bereich wannenseitig angeordnet ist und ebenfalls plastisch dehn- bzw. verformbar ist. Diese Deckfolie ist einstückig bzw. durchgehend und weist keine Schlitze oder Perforierungen oder Schwächungen auf. Durch diese Deckfolie ist gewährleistet, dass das Silikon einer Abschlussfuge zwischen dem unteren Rand der Wandfliesen oder - platten und der Wannenabbordung oder zwischen einem .Anschlussboden und der Wannenabbordung oder zwischen zwei Anschlusswänden in der Vertikalen keinen Kontakt zu dem Butyl oder Klebematerial bekommen kann und chemisch reagiert.

Die plastische Dehn- bzw. Verformbarkeit des Dicht- und Montageband-Grundkörpers bzw. Trägermaterials bringt vorteilhafterweise mit sich, dass der obere Bereich beliebig in jede Eckkante zweier Anschlusswände hineingezogen und -gedrückt werden kann, in jeder beliebigen Richtung und ohne, dass Rückstellkräfte wirken. Die plastische Dehn- bzw. Verformbarkeit des Butyl-oder Klebebandes resultiert einerseits aus seiner speziellen Beschaffenheit und andererseits aus seiner Materialdicke. Je mehr gezogen wird, desto dünner wird das Material. Dieses bietet weiterhin Vorteilhafterweise die Möglichkeit, Überlappungen mehrerer Dicht- und Montageband- Abschnitte zu erstellen, die nicht auftragen.

Vorzugsweise an der Rückseite, also der wandseitigen Seite des unteren Bereichs des Dicht- und Montageband-Grundkörpers bzw. Trägermaterials, oder aber optional auch an der wannenseitigen Vorderseite, ist vorzugsweise mindestens ein Schallschutz-Streifen aus schalldämmendem Schaumstoff oder Butyl angeordnet.

Die Klebeflächen, also sowohl diejenige für die Wannenabbordung, als auch diejenige für die Wand, sind vorzugsweise mit schützenden Silikonpapier-Streifen bedeckt, die bei der Montage abgezogen werden können.

Optional kann eine erfindungsgemässe Dicht- und Montageband-Anordnung mindestens einen Schnittschutz-Streifen umfassen, wie erstmalig in dem österreichischen Gebrauchsmuster GM 438/2010, umgewandelt in das österreichische Patent AT 510127, offenbart wurde. Dieser Schnittschutz-Streifen kann ein flexibler Streifen resp. ein Band aus dünnem Metallblech, - gitter oder -geflecht sein oder aus verdichtetem Schaum- oder Kunststoff oder CFK oder Aramid-Fasern oder aus ähnlichen nicht oder nur schwer zerschneidbaren Materialien bestehen. Der Schnittschutz-Streifen kann an der wannenseitigen Vorderseite im annähernd mittigen Bereich des Dicht- und Montagebandes angeklebt sein, oder aber auch an der wandseitigen Rückseite, ebenfalls nur im annähernd mittigen Bereich. Denkbar ist es auch, dass der Schnittschutz-Streifen in das Material des Dicht- und Montageband-Grundkörpers bzw. Trägermaterials eingegossen oder eingebettet ist. Weiter kann der Schnittschutz als L-Profil oder als Streifen mit Knickstelle, so dass er in eine L-Profil faltbar ist, ausgebildet sein. Ein solcher Schnittschutz kann beispielsweise auf dem Dicht- und Montagband-Grundkörper vormontiert z.B. wenigstens teilweise festgeklebt sein. Er kann auch vor der Montage des Dicht- und Montageband-Grundkörpers am Einbaugestand befestigt werden und/oder nach der Montage des Dicht- und Montageband-Grundkörpers an diesem befestigt werden.

Es ist des Weiteren möglich, einen Zusatz-Dichtstreifen vorzusehen, der über den oberen Bereich des bereits plastisch verformten und an der Wand angeklebten Dicht- und Montageband-Grundkörpers bzw. Trägermaterials überlappend angeordnet wird. Dieser Zusatz-Dichtstreifen ist vorzugsweise aus einem gut flexiblen Vlies mit einer rück- bzw. wandseitigen Klebefläche gebildet und kann weiterhin optional wiederum mindestens einen Schnittschutz-Streifen integriert oder angeklebt haben, optional auch zusätzlich zu dem bereits oben beschriebenen Schnittschutz-Streifen.

Der Schnittschutz-Streifen kann auch in eine am Dicht- und Montageband-Grundkörper ausgebildeten Tasche eingesteckt sein. Diese Tasche kann beispielsweise durch einen auf dem Dicht- und Montageband-Grundkörper angebrachten Schallschutz-Streifen ausgebildet sein.

Weiterhin optional kann die Dicht- und Montageband- Anordnung mindestens einen sogenannten Kapillarschutzstreifen umfassen.

Die Dicht- und Montageband-Anordnung kann des Weiteren einen im vormontierten Zustand annähernd waagerechten Schutzstreifen umfassen, der auf einer waagerechten Oberfläche der Wannenabbordung ausgebreitet oder mittels einer unterseitigen Klebefläche daran angeklebt werden kann. Dieser waagerechte Schutzstreifen kann optional mit dem Dicht- und Montageband-Grundkörper bzw. Trägermaterial verbunden sein, aber auch lose Bestandteil eines erfindungsgemässen Dichtband-Anordnung-Sets sein. Er schützt die Wannenoberfläche bei der Montage und beim Fliesenlegen und bietet darüber hinaus eine Hilfe beim Fliesenlegen insofern, als dass der untere Rand der untersten Fliesenreihe beim Verlegen darauf abgestützt werden kann. Nach erfolgter Trocknung der Fliesen sowie nach erfolgtem Verfugen der Wandfliesen oder -platten kann der waagerechte Schutzstreifen an einer möglichen Längsperforation abgerissen werden. Der dabei zwischen dem unteren Rand der Wandfliesen oder -platten und der Wannenabbordung Verbleibende Restabschnitt des waagerechten Schutzstreifens ist gleichzeitig eine Hilfe für das Verfugen mit einer Abschluss-Silikonfuge.

Die offenbarten unterschiedlichen Ausgestaltungsvarianten einer erfindungsgemässen Dicht- und Montageband-Anordnung sind hinsichtlich der nicht grundfunktionsrelevanten Merkmale beliebig miteinander kombinierbar. So sind beispielsweise die Ausgestaltungsvarianten mit oder ohne Schallschutz-Streifen gleichermassen und reziprok untereinander kombinierbar mit den Ausgestaltungsvarianten mit Schnittschutz-Streifen, sowie mit den Ausgestaltungsvarianten mit überlappendem Zusatz-Dichtstreifen, mit oder ohne Schnittschutz, sowie mit den Ausgestaltungsvarianten mit KapillarSchutzstreifen oder einem waagerechten Schutzstreifen. All die aufgezählten Ausgestaltungsvarianten, aber auch die kombinierten Ausgestaltungsvarianten, die sich aus den möglichen Kombinationen ergeben, sind gleichermassen und reziprok untereinander kombinierbar.

Die vorliegende Anmeldung offenbart ein Verfahren zur Montage einer Dusch-oder Badewanne bzw. zur Verwendung einer wie offenbarten Dicht- und Montageband-Anordnung mit einem plastisch dehn- bzw. verformbaren Dicht- und Montageband- Grundkörper bzw. Trägermaterial und einer ebenfalls plastisch dehn- bzw. verformbaren, mindestens an einem zweiten, oberen Bereich des Dicht- und Montageband-Grundkörpers bzw. Trägermaterials wannenseitig angeordneten Deckfolie; unter Ausführung folgender grundsätzlicher Verfahrensschritte:
a) - Abziehen eines ersten Silikonpapier-Streifens von einem ersten, unteren Bereich des Dicht- und Montageband-Grundkörpers bzw. Trägermaterials;
b) - Ankleben des ersten, unteren Bereichs des Dicht- und Montageband-Grundkörpers bzw. Trägermaterials an einer Wannenabbordung der Dusch- oder Badewanne;
c) - Setzen der Dusch- oder Badewanne in ein Eck gebildet aus einer ersten und einer zweiten Anschlusswand oder an mindestens einen Anschlussboden oder an mindestens einen Wandübergang:
d) - Abziehen eines zweiten Silikonpapier-Streifens von dem zweiten, oberen Bereich des Dicht- und Montageband-Grundkörpers bzw. Trägermaterials;
e) - Ankleben des zweiten, oberen Bereichs des Dicht- und Montageband-Grundkörpers bzw. Trägermaterials an der ersten und an der zweiten Anschlusswand oder an mindestens einen Anschlussboden oder an mindestens einen Wandübergang;
f) - Dehnen, Verformen und Anbringen des zweiten, oberen Bereichs des Dicht- und Montageband-Grundkörpers bzw. Trägermaterials hinein in das Eck gebildet aus der ersten und der zweiten Anschlusswand oder an den Anschlussboden oder Kombinationen hiervon, wobei das Dehnen und Verformen plastisch sein kann;
g) - falls vorgesehen, Ausbreiten, oder falls wiederum vorgesehen, Ankleben eines waagerechten Schutzstreifens an einer waagerechten Oberfläche der Wannenabbordung;
h) - falls vorgesehen, Abziehen eines dritten und vierten Silikonpapier-Streifens von der wandseitigen Rückseite eines Zusatz-Dichtstreifens;
i) - falls vorgesehen, Ankleben eines Zusatz-Dichtstreifens überlappend über den zweiten, oberen Bereich des Dicht- und Montageband-Grundkörpers bzw. Trägermaterials;
j) - Verlegen von Wandfliesen oder -platten überlappend über den zweiten, oberen Bereich des Dicht- und Montageband-Grundkörpers bzw. Trägermaterials;
k) - falls vorgesehen, Abreissen des waagerechten Schutzstreifens an einer Längsperforation;
l) - Verfugen mit einer Abschluss-Silikonfuge zwischen dem unteren Rand der Wandfliesen oder -platten und der Wannenabbordung.

Die Erfindung betrifft weiter die Verwendung einer voran beschriebenen Dicht- und Montageband-Anordnung für das Setzen einer Dusch-, Bade- oder Whirlwanne oder andere Einbaugegenstände an mindestens eine Anschlusswand oder mindestens einen Anschlussboden und für das Abdichten von Übergängen eines Einbaugegenstands zu Eckbereichen von Anschlusswänden und/oder -böden. Die Dicht- und Montageband-Anordnung kann auch bei Wand-Wand-, Wand-Boden- oder Boden-Boden-Anschlüssen Verwendung finden.

Ein erfindungsgemässes Dicht- und Montageband bzw. eine damit realisierte erfindungsgemässe Dicht- und Montageband- Anordnung bringt folgende Vorteile:
- Der Sanitärfachmann muss bei der Montage der Dusch- oder Badewanne für die Eckbereiche keine zusätzlichen Anpassungsarbeiten leisten und keine Improvisationslösungen suchen.
- Die erfindungsgemässe Dicht- und Montageband-Anordnung ist langanhaltend dicht.
- Der Dicht- und Montageband-Grundkörper bzw. Trägermaterial ist einstückig, ohne Trennnähte.
- Die erfindungsgemässe Dicht- und Montageband-Anordnung hat wenig Komponenten und ist einfach in der Herstellung.
- Der Dicht- und Montageband-Grundkörper bzw. Trägermaterial ist beliebig in alle Richtungen dehn- bzw. verformbar.
- Es wirken keine oder kaum Rückstellkräfte auf die Verklebungen.
- Es findet kein Kontakt zwischen Butyl oder Klebematerial und Silikon statt.
- Es sind Überlappungen von Dicht- und Montageband-Abschnitten möglich, die nicht auftragen.
- Die Dicht- und Montageband-Anordnung ist schallschutzoptimiert.
- Die Dicht- und Montageband-Anordnung ist gegen Zerschneiden geschützt.

Weitere oder vorteilhafte Ausgestaltungen einer erfindungsgemässen Dicht- und Montageband-Anordnung bilden die Gegenstände der abhängigen Ansprüche.

Die Bezugszeichenliste ist Bestandteil der Offenbarung.

### Kurze Erläuterung zu den Figuren

Anhand von Figuren wird die Erfindung symbolisch und beispielhaft näher erläutert. Die Figuren werden zusammenhängend und übergreifend beschrieben. Sie stellen schematische und beispielhafte Darstellungen dar und sind nicht massstabsgetreu, auch in der Relation der einzelnen Bestandteile zueinander nicht. Gleiche Bezugszeichen bedeuten das gleiche Bauteil, Bezugszeichen mit unterschiedlichen Indizes geben funktionsgleiche oder ähnliche Bauteile an.

Es zeigen dabei
- Fig. 1: eine symbolische und beispielhafte perspektivische Ansicht von schräg oben auf eine Ausgestaltungsvariante einer erfindungsgemässen Dicht- und Montageband-Anordnung, beim Setzen einer Dusch- oder Badewanne in ein Eck gebildet von zwei Anschlusswänden;
- Fig. 2: eine symbolische und beispielhafte perspektivische Ansicht ebenfalls von schräg oben auf die Ausgestaltungsvariante einer erfindungsgemässen Dicht- und Montageband-Anordnung aus der Fig. 1, nachdem der plastisch dehn- und verformbare obere Bereich des Dichtbandes in das Eck hineingezogen und -gedrückt worden ist;
- Fig. 3: eine symbolische und beispielhafte Schnittansicht einer Ausgestaltungsvariante einer erfindungsgemässen Dicht- und Montageband-Anordnung mit separaten Klebeschichten, im montierten Zustand;
- Fig. 4: eine symbolische und beispielhafte Schnittansicht einer Ausgestaltungsvariante einer erfindungsgemässen Dicht- und Montageband-Anordnung mit einem selbstklebenden Dicht- und Montageband-Grundkörper bzw. Trägermaterial, ebenfalls im montierten Zustand;
- Fig. 5: eine symbolische und beispielhafte Schnittansicht einer Ausgestaltungsvariante einer weiterhin erfindungsgemässen Dicht- und Montageband-Anordnung mit einem Schallschutz- und einem Kapillarschutzstreifen, ebenfalls im montierten Zustand;
- Fig. 6: eine symbolische und beispielhafte Schnittansicht einer Ausgestaltungsvariante einer weiterhin erfindungsgemässen Dicht- und Montageband-Anordnung mit einer sich über den oberen und unteren Bereich wannenseitig erstreckenden Deckfolie und einer zweiten Butyl- oder Klebeschicht;
- Fig. 7: eine symbolische und beispielhafte Schnittansicht einer Ausgestaltungsvariante einer weiterhin erfindungsgemässen Dicht- und Montageband-Anordnung mit einem Schnittschutz-Streifen, ebenfalls im montierten Zustand;
- Fig. 8: eine symbolische und beispielhafte Schnittansicht einer Ausgestaltungsvariante einer weiterhin erfindungsgemässen Dicht- und Montageband-Anordnung mit einem überlappenden Zusatz-Dichtstreifen mit Schnittschutz, ebenfalls im montierten Zustand;
- Fig. 9: eine symbolische und beispielhafte Schnittansicht einer Ausgestaltungsvariante einer weiterhin erfindungsgemässen Dicht- und Montageband-Anordnung mit einem waagerechten Schutzstreifen mit einer Längsperforation, ebenfalls im montierten Zustand;
- Fig. 10: eine symbolische und beispielhafte Schnittansicht einer Ausgestaltungsvariante einer weiterhin erfindungsgemässen Dicht- und Montageband-Anordnung mit einem wannenseitig angeordneten Schallschutz-Streifen und einer zweiten Butyl-Schicht, alles ebenfalls im montierten Zustand einer Dusch- oder Badewanne;
- Fig. 11: eine perspektivische Ansicht einer eingebauten Duschwanne mit herkömmlichen Dicht- und Montagebändern (Stand der Technik);
- Fig. 12: eine perspektivische Ansicht eines an einer Duschwanne angebrachten Dicht- und Montagebandes vor dem Einbau;
- Fig. 13: eine perspektivische Ansicht einer eingebauten Duschwanne mit erfindungsgemässer Dicht- und Montageband-Anordnung;
- Fig. 14: eine Schnittdarstellung einer Dicht- und Montageband-Anordnung in verschiedenen Varianten (a) bis (c);
- Fig. 15: eine Dicht- und Montageband-Anordnung im Einbauzustand in verschiedenen Varianten (a) bis (c);
- Fig. 16: unter (a) bis (g) verschiedene Einbauvarianten einer Dicht- und Montageband-Anordnung mit Schnittschutz;
- Fig. 17: eine Schnittdarstellung einer Dicht- und Montageband-Anordnung mit Schallschutz-Streifen; und
- Fig. 18: unter (a) bis (c) Schnittdarstellungen weiterer Varianten einer Dicht- und Montageband-Anordnung mit Schallschutz-Streifen.

### Wege zur Ausführung der Erfindung

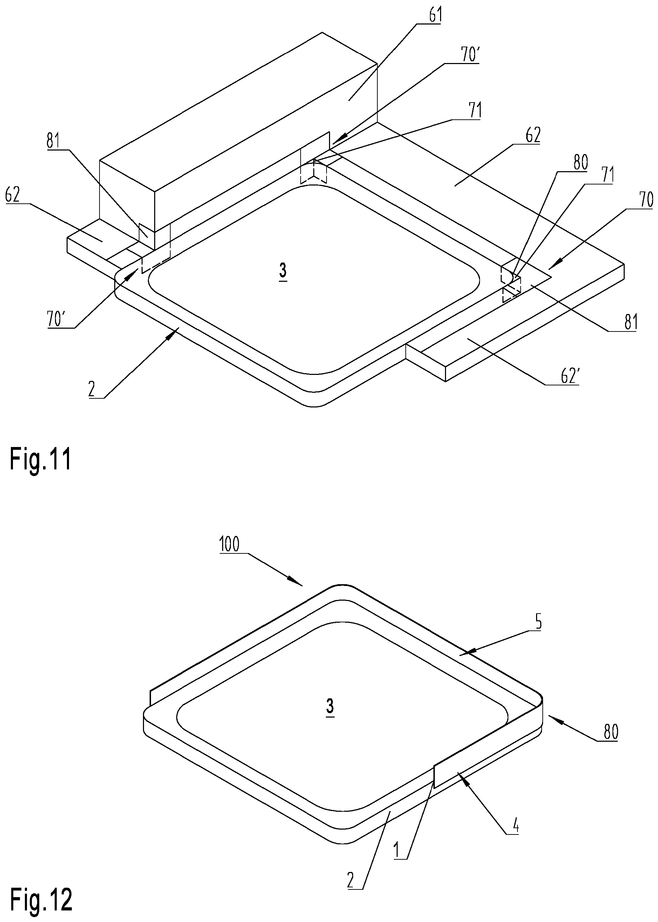

Fig. 11 zeigt eine perspektivische Ansicht einer eingebauten Duschwanne 3 mit einem herkömmlichen Dicht- und Montageband, wie es aus dem Stand der Technik bekannt ist. Die Rundungen der Wannenecken werden vor dem Anbringen des Dicht- und Montagebands mittels einem an die Rundung der Wannenecke 80 angepasstem oder anpassbarem Eckstück 71 ausgeglichen. Anschliessend wird das Dicht- und Montageband mit einem ersten, unteren Bereich an die Abbordung 2 der Wanne 3 geklebt. Ein zweiter, oberer Bereich wird an eine Anschlusswand 61 oder an einen Anschlussboden 62 geklebt. In Boden-Boden-Eckbereichen 70 zwischen Anschlussboden 62 und Anschlussboden 62' oder bei Wand-Boden-Übergängen 70' von Anschlusswand 61 zu Anschlussboden 62 muss das herkömmliche Dicht- und Montageband eingeschnitten werden. Um diese Bereiche dennoch zuverlässig abzudichten, werden angepasste oder anpassbare Abdichtprofile oder -elemente 81 verwendet, welche die Gestaltung des Eckbereichs bzw. des Übergangs abbilden und mit dem darunterliegenden Dicht- und Montageband überlappend und dichtend verbunden werden. Dies ist jedoch aufwendig und anfällig für Fehler.

Fig. 12 zeigt die erfindungsgemässe Dicht- und Montageband-Anordnung 100, welche mit dem ersten, unteren Bereich 4 des Dicht- und Montageband-Grundkörpers bzw. des Trägermaterials 1 mit der wannenseitigen Klebefläche an der Abbordung 2 einer Duschwanne 3 befestigt ist. Die Dicht- und Montageband-Anordnung 100 kann dabei direkt um die Wannenecken 80 befestigt werden, ohne dass Eckstücke notwendig sind. Diese können jedoch bei Bedarf eingesetzt werden. Der zweite, obere Bereich 5 des Dicht- und Montageband-Grundkörpers bzw. Trägermaterials 1 ragt hier noch senkrecht nach oben.

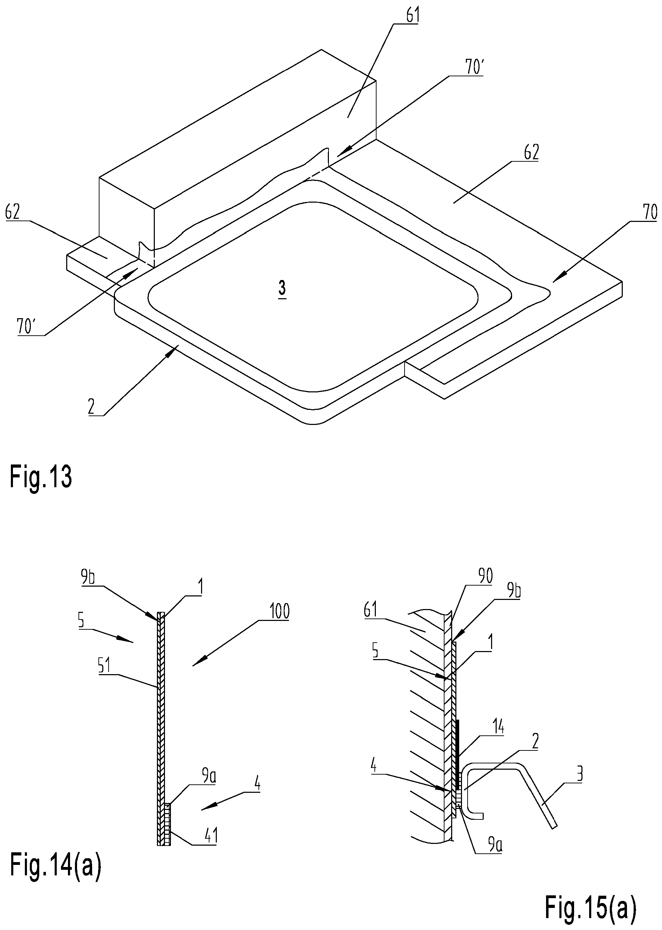

Fig. 13 zeigt sodann die Duschwanne 3 und die Dicht- und Montageband-Anordnung 100 im eingebauten Zustand. Dabei ist der zweite, obere Bereich 5 des Dicht- und Montageband-Grundkörpers bzw. des Trägermaterials 1 mit der wand- resp. bodenseitigen Klebefläche an einer Anschlusswand 61 und/oder an einem Anschlussboden 62 befestigt. In den Boden-Boden-Eckbereichen 70 zwischen Anschlussboden 62 und Anschlussboden 62' oder bei Wand-Boden-Übergängen 70' von Anschlusswand 61 zu Anschlussboden 62 ist der Grundköper resp. das Trägermaterial 1 gedehnt und derart verformt, dass es passend in resp. um die Ecken gelegt resp. gezogen ist.

Gute Ergebnisse konnten mit einem Trägermaterial 1 erzielt werden, welches eine Dehnbarkeit in Quer- und Längsrichtung von mindestens 200 % aufweist, beispielsweise mit eine Acrylatklebeband. Obwohl solche Bänder eine gewisse Elastizität aufweisen können, ist die Haftung und Ausdehnung der Klebeflächen derart gewählt, dass sie allfälligen Rückstellkräften ohne weiteres entgegenwirken können und sich die Dicht- und Montageband-Anordnung nach der Montage mit der Zeit nicht von selbst lösen kann. Ggf. kann die Verbindung durch Auftragen einer Verbundabdichtung über den oberen, zweiten Bereich 5 zusätzlich verstärkt sein.

Fig. 14(a) zeigt eine Schnittdarstellung einer Ausführungsform einer Dicht- und Montageband-Anordnung 100 aus Fig. 13 mit einem Dicht- und Montageband-Grundkörper resp. mit einem Trägermaterial 1, welches in einem ersten, unteren Bereich 4 einbaugegenstand- resp. wannenseitig mit einem Klebestreifen 9a versehen ist. Auf der gegenüberliegenden Seite ist eine vollflächige Klebefläche 9a vorhanden, welche sich über den oberen und unteren Bereich 4, 5 erstreckt. Diese kann sich auch lediglich über den zweiten, oberen Bereich erstrecken. Klebestreifen 9a und Klebefläche 9b sind jeweils mit einem Abziehstreifen 41 resp. 51 versehen.

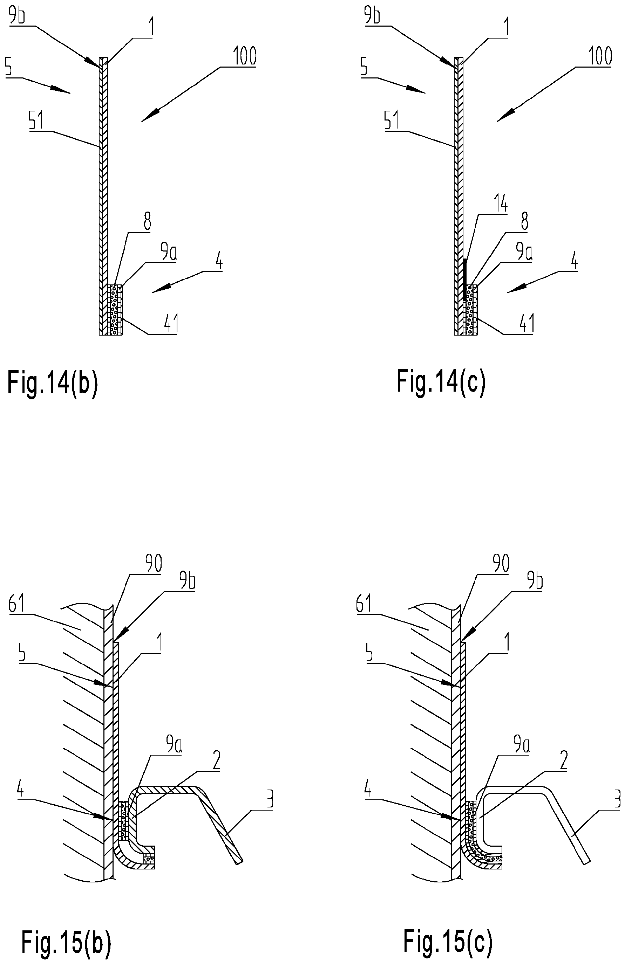

Fig. 14(b) zeigt eine Variante der Dicht- und Montageband-Anordnung 100 aus Fig. 14(a) mit einem zusätzlichen Schallschutz-Streifen 8, welcher im Bereich des einbaugegenstandseitigen Klebestreifens 9a angeordnet ist.

Fig. 14(c) zeigt eine Variante der Dicht- und Montageband-Anordnung 100 aus Fig. 14(b) mit einem zusätzlichen Schnittschutz-Streifen 14, welcher teilweise überlappend mit dem Schallschutz-Streifen 8 angeordnet ist und sich teilweise in den zweiten, oberen Bereich 5 erstreckt. Der Schnittschutz-Streifen 14 ist zwischen Schallschutz-Streifen 8 und Dicht- und Montageband-Grundkörper resp. Trägermaterial 1 eingeklebt oder eingeschoben.

Fig. 15(a) zeigt eine mögliche Einbauvariante einer Dicht- und Montageband-Anordnung 100 mit einem Dicht- und Montageband-Grundkörper resp. mit einem Trägermaterial 1. Dieses ist mit der wannenseitigen Klebefläche 9a des ersten, unteren Bereichs 4 auf die Abbordung 2 des Einbaugegenstands geklebt. Mit der wandseitigen Klebefläche 9b ist sie mit dem zweiten, oberen Bereich 5 auf eine auf der Anschlusswand 61 aufgetragenen Verbundabdichtung 90 geklebt. Bereits ein schmaler Überbrückungsbereich zwischen dem ersten, unteren Bereich und dem zweiten, oberen Bereich, welcher weder auf der Wanne noch auf der Wand festgeklebt ist, reicht aus, um Setzungen der Wanne gegenüber der Wand zuzulassen, ohne dass die Dicht- und Montageband-Anordnung reisst. In der gezeigten Ausführungsform ist zusätzlich ein Schnittschutzband resp. -streifen 14 im ersten, unteren Bereich 4 festgeklebt, welcher den zweiten oberen Bereiche 5 teilweise überlappt. Im zweiten, oberen Bereich ist der Schnittschutzband nicht festgeklebt, so dass die Dehnbarkeit des Überbrückungsbereichs nicht beeinträchtigt ist. Weitere können Schallschutz-Streifen, Kapillarschutzstreifen oder sonstige Elemente wie sie weiter unten noch beschreiben sind, auf dem Trägermaterial angeordnet sein.

Weitere nicht dargestellte Einbauvarianten können im Unterschied zur Variante Anschlusswand-Verbundabdichtung-Dichtband-Schnittschutz der Fig. 15 auch folgenden Aufbau haben:
(i) Anschlusswand - Dichtband - Schnittschutz - Verbundabdichtung;
(ii) Anschlusswand - Dichtband - Verbundabdichtung - Schnittschutz;
(iii) Anschlusswand - Verbundabdichtung - Dichtband - Schnittschutz - Verbundabdichtung; oder
(iv) Anschlusswand - Verbundabdichtung - Dichtband - Verbundabdichtung - Schnittschutz.

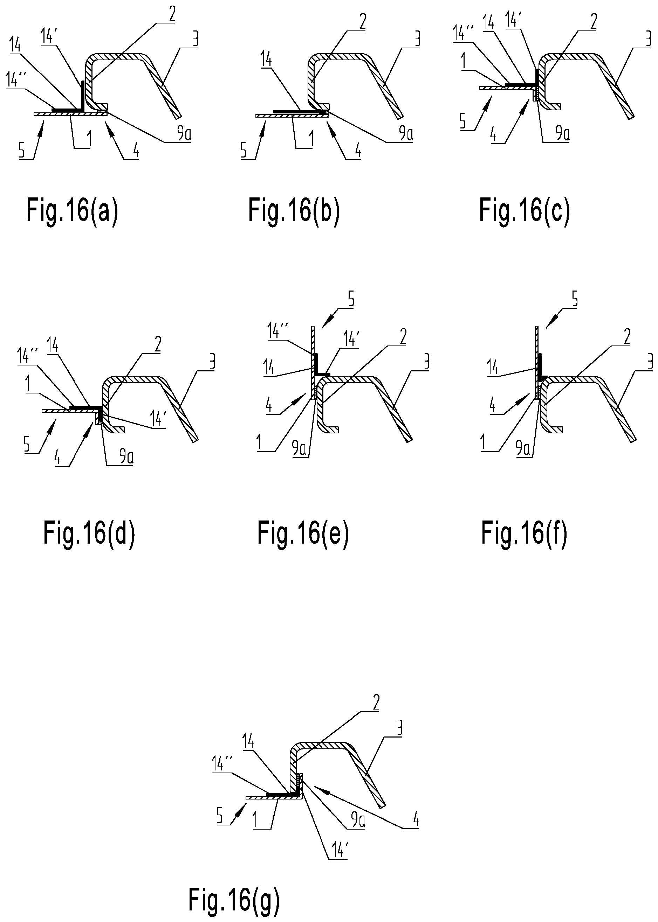

Fig. 15(b) zeigt ein Variante der eingebauten Dicht- und Montageband-Anordnung mit einem Schallschutz-Streifen 8. Der Schnittschutz-Streifen ist hier nicht dargestellt, kann aber vorhanden sein, wie z.B. unter Fig. 14(c) oder den Figuren 16(a) bis (g) gezeigt. Im Unterschied zu Fig. 15(a) weist die Dicht- und Montageband-Anordnung eine zweiten Schallschutzstreifen 8' und einen zweiten einbaugegenstandseitigen Klebestreifen 9a' auf, welche derart angeordnet sind, dass sie an eine horizontale Abwinklung der Abbordung 2 befestigbar sind.

Fig. 15(c) zeigt eine Variante der eingebauten Dicht- und Montageband-Anordnung aus Fig. 15(c) mit nur einem aber dafür breiteren Schallschutz-Streifen 8. Dieser ist in der gezeigten Variante an der Abbordung 2 und der horizontalen Abwinklung befestigt.

Fig. 16 zeigt unter (a) bis (g) verschiedene Einbauvarianten resp. Verwendungen einer Dicht- und Montageband-Anordnung mit Schnittschutz. Fig. 16(a): Die Dicht- und Montageband-Anordnung ist mit der wannenseitigen Klebefläche 9a im ersten Bereich 4 an eine Abwinkelung der Wannenabbordung geklebt. Der Schnittschutz 14 ist im Einbauzustand L-förmig und mit einem ersten Schenkel 14' an der Wannenabbordung 2 festgeklebt. Ein zweiter Schenkel 14" ist den zweiten, waagrecht angeordneten Bereich 5 des Grundkörpers 1 zumindest teilweise überlappend angeordnet. Der zweite Schenkel 14" kann lose oder festgeklebt sein.

Fig. 16(b): Im Unterschied zu Fig. 16(a) ist der Schnittschutz 14 gerade und mit einem Teilbereich zusammen mit dem ersten Bereich 4 des Grundkörpers 1 an der Abwinkelung der Wannenabbordung 2 festgeklebt.

Fig. 16(c): Im Unterschied zu Fig. 16(a) ist der untere Bereich 4 des Grundkörpers 1 abgewinkelt und in einem unteren Bereich der Wannenabbordung 2 festgeklebt. Der Schnittschutz 14 ist L-förmig und mit dem ersten Schenkel 14' in einem oberen Bereich der Wannenabbordung 2 festgeklebt.

Fig. 16(d): Im Unterschied zu Fig. 16(c) ist der L-förmige Schnittschutz 14 mit dem ersten Schenkel 14' im unteren Bereich der Wannenabbordung 2 zwischen Grundkörper 1 und Wanne 3 festgeklebt.

Fig. 16(e): Im Unterschied zu Fig. 16(c) ist der zweite Bereich 5 senkrecht angeordnet und der L-förmige Schnittschutz 14 ist mit dem ersten Schenkel 14' auf dem äussersten Wannenrand festgeklebt.

Fig. 16(f): Im Unterschied zu Fig. 16(e) ist der Schnittschutz 14 als keilförmiges Profil ausgestaltet und in eine Aussparung zwischen Wanne und Grundkörper 1 eingesetzt. Je nach Grösse der Aussparung ist dies auch mit einem L-förmigen Schnittschutz möglich.

Fig. 16(g): Im Unterschied zu Fig. 16(a) ist der erste Bereich 4 des Grundkörpers 1 rückseitig an die Abbordung 2 einer Wanne 3 ohne untere Abwinkelung festgeklebt. Der L-förmige Schnittschutz 14 ist mit dem ersten Schenkel 14' zwischen dem ersten Bereich 4 und der Wannenabbordung 2 festgeklebt.

Die verschiedene Einbauvarianten resp. Verwendungen einer Dicht- und Montageband-Anordnung mit Schnittschutz gemäss den Figuren 16(a) bis (g) können zusätzlich mit Schallschutz-Streifen 8, 8' wie beispielsweise in den Figuren 14 und 15 gezeigt, versehen sein.

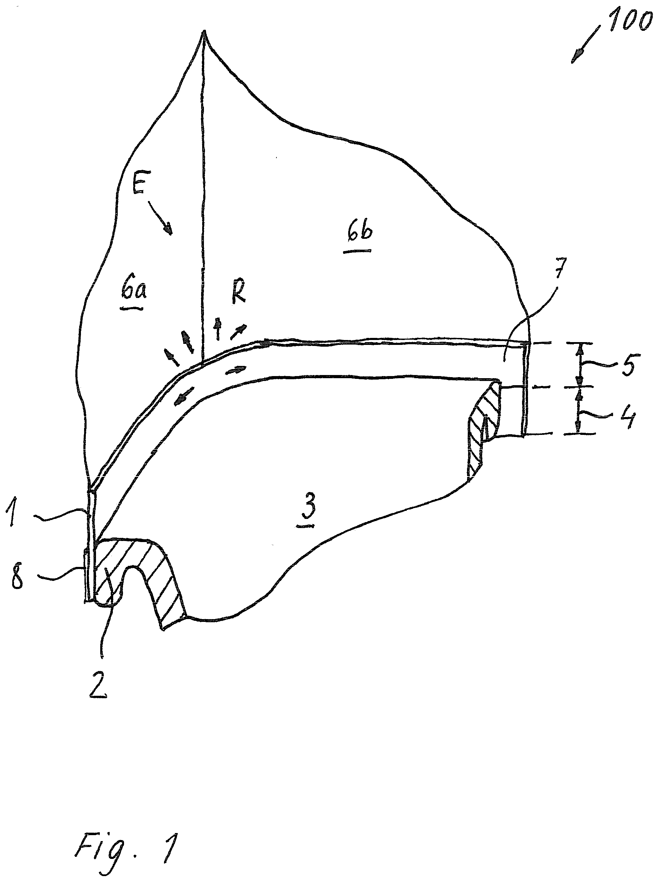

Im Folgenden sind anhand den Figuren 1 bis 10 verschiedene Ausgestaltungsvarianten einer Dicht- und Montageband-Anordnung 100 beschrieben, die einen in beliebige Richtungen R plastisch dehn- und verformbaren Dicht- und Montageband- Grundkörper bzw. Trägermaterial 1 umfassen. Diese Ausgestaltungsvarianten sind auch auf die voran beschriebene Dicht- und Montageband-Anordnung 100 übertragbar, wobei die plastisch dehn- bzw. verformbare Deckfolie 7 nicht zwingend erforderlich ist.

Die Fig. 1 zeigt in einer symbolischen und beispielhaften perspektivischen Ansicht von schräg oben eine Ausgestaltungsvariante einer erfindungsgemässen Dicht- und Montageband-Anordnung 100, die einen in beliebige Richtungen R plastisch dehn- und verformbaren Dicht- und Montageband- Grundkörper bzw. Trägermaterial 1 umfasst, wobei der bzwdas Letztere bereits an einer Wannenabbordung 2 einer Dusch- oder Badewanne 3 mit einem ersten, unteren Bereich 4 angeklebt ist. Ein zweiter, oberer Bereich 5 ragt über die Wannenabbordung 2 hinaus und kann plastisch so gedehnt und verformt werden, dass er in ein Eck E, gebildet aus einer ersten Anschlusswand 6a und einer zweiten Anschlusswand 6b, dicht eingefügt werden kann.

Die erfindungsgemässe Dicht- und Montageband- Anordnung 100 umfasst des Weiteren eine plastisch dehn- bzw. verformbare Deckfolie 7 wannenseitig und optional an dem oberen Bereich 5, sowie einen Schallschutz-Streifen 8, der wandseitig an dem unteren Bereich 4 angeordnet ist.

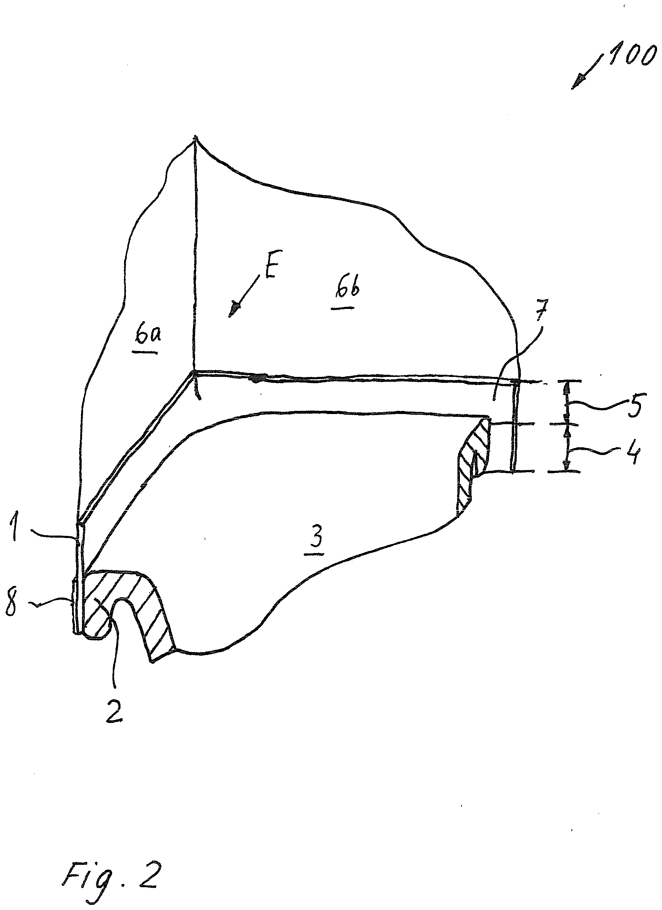

In der Fig. 2 ist in einer symbolischen und beispielhaften und perspektivischen Ansicht die Dicht- und Montageband-Anordnung 100 aus der Fig. 1 gezeigt, nachdem der obere Bereich 5 in das Eck E gedehnt und hineingedrückt worden ist.

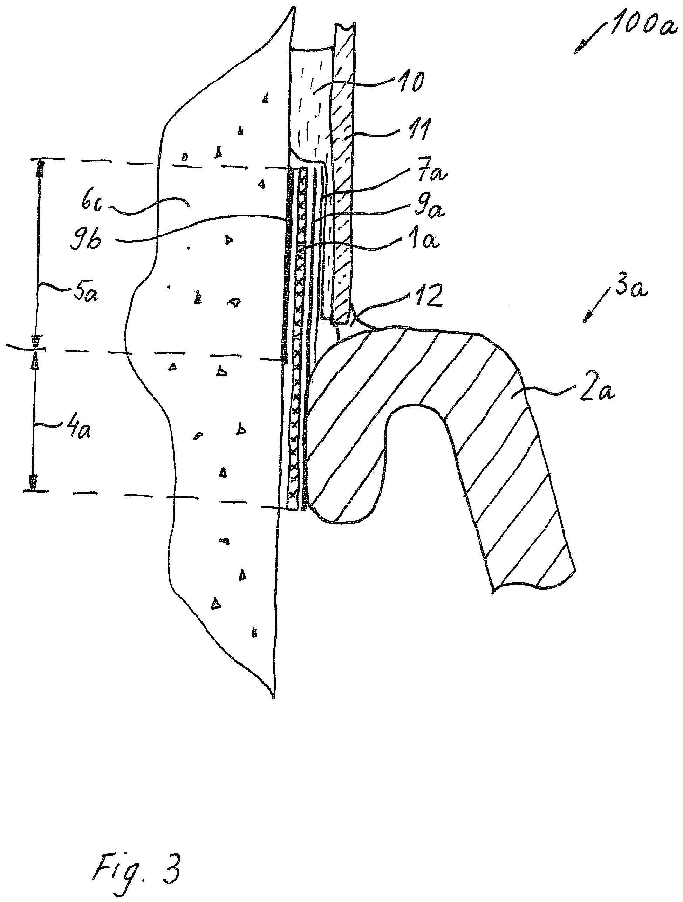

Die Fig. 3 zeigt, im endmontierten Zustand, in einer symbolischen und beispielhaften Schnittansicht eine Ausgestaltungsvariante einer weiterhin erfindungsgemässen Dicht- und Montageband-Anordnung 100a, die sich im Wesentlichen dadurch auszeichnet, dass ein plastisch dehn- bzw. verformbarer Dicht- und Montageband-Grundkörper bzw. Trägermaterial 1a nicht aus einem insgesamt selbstklebenden Material besteht und demzufolge hin zu einer Wannenabbordung 2a einer Dusch- oder Badewanne 3a eine erste, separate Klebeschicht 9a aufweist und hin zu einer Anschlusswand 6c eine zweite, separate Klebeschicht 9b. Die erste, separate Klebeschicht 9a erstreckt sich vorzugsweise sowohl über einen ganzen ersten, unteren Bereich 4a und einen ganzen zweiten, oberen Bereich 5a des plastisch dehn- und verformbaren Dicht- und Montageband-Grundkörpers bzw. Trägermaterials 1a.

Wannenseitig erstreckt sich eine plastisch dehn- und verformbare Deckfolie 7a über den zweiten bzw. oberen Bereich 5a.

Es ist des Weiteren in dieser Fig. 3 ersichtlich, wie ein Fliesenkleber 10 und eine Wandfliese oder -platte 11 aufgebracht sind, sowie wo eine Abschluss-Silikonfuge 12 gesetzt wird.

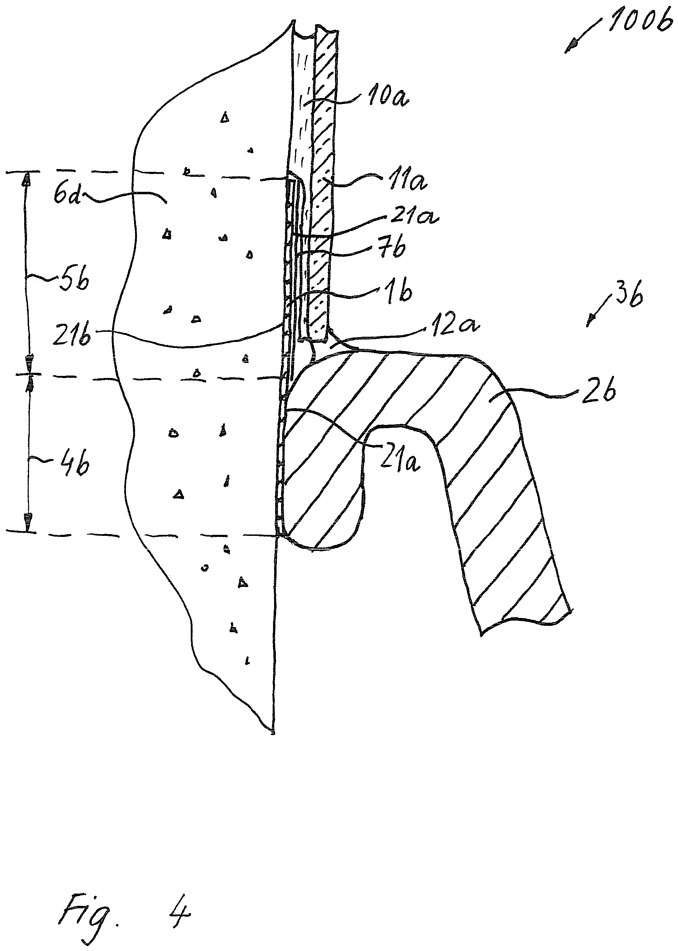

In der Fig. 4 ist, erneut im endmontierten Zustand, in einer symbolischen und beispielhaften Schnittansicht eine weiterhin bevorzugte, Ausgestaltungsvariante einer erfindungsgemässen Dicht- und Montageband-Anordnung 100b gezeigt, bei der ein plastisch dehn- bzw. verformbarer Dicht- und Montageband-Grundkörper bzw. Trägermaterial 1b insgesamt aus selbstklebendem Material besteht und somit die separaten Klebeschichten 9a und 9b aus der Fig. 3 überflüssig sind. Der Dicht- und Montageband-Grundkörper bzw. Trägermaterial 1b formt vielmehr selber jeweils eine durchgehende wannenseitige Klebefläche 21a sowie eine wandseitige Klebefläche 21b aus.

Der plastisch dehn- bzw. verformbare Dicht- und Montageband-Grundkörper bzw. das Trägermaterial 1b klebt wannenseitig in einem ersten bzw. unteren Bereich 4b direkt an einer Wannenabbordung 2b einer Dusch- oder Badewanne 3b und wandseitig, hin zu einer Anschlusswand 6d, ebenfalls direkt, und zwar sowohl über dem ersten, unteren Bereich 4b, als auch über einem zweiten, oberen Bereich 5b.

Wannenseitig und optional ist der zweite, obere Bereich 5b erneut von einer durchgehenden, plastisch dehn- bzw. verformbaren Deckfolie 7b bedeckt.

Eine Wandfliese oder -platte 11a ist mittels Fliesenkleber 10a den zweiten, oberen Bereich 5b überlappend aufgebracht und eine Abschluss-Silikonfuge 12a schliesst den unteren Rand der Wandfliese oder -platte 11a zu der Wannenabbordung 2b ab.

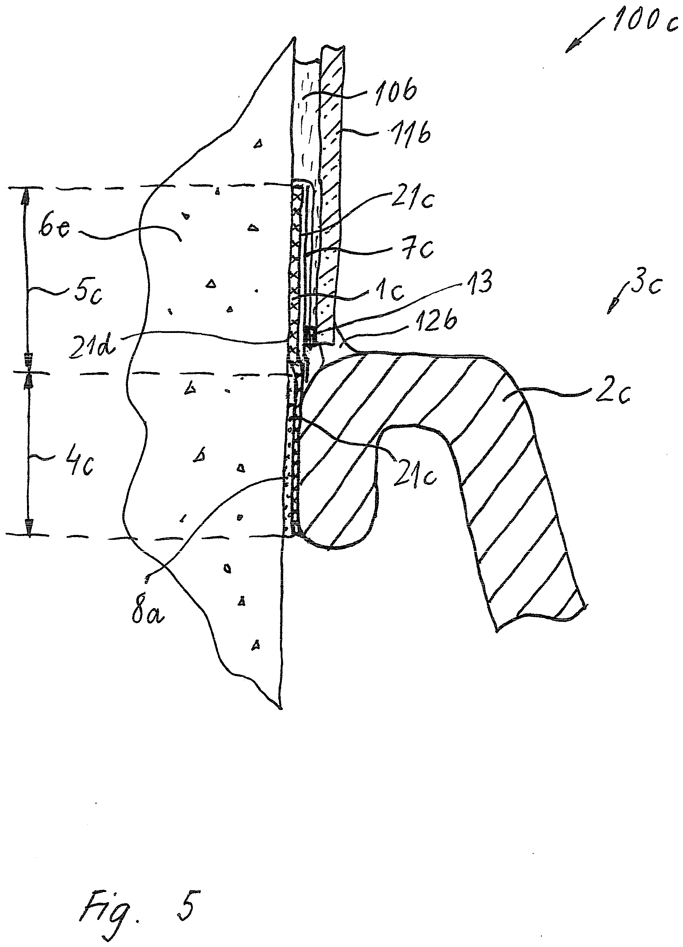

Die Fig. 5 zeigt, erneut im endmontierten Zustand, in einer weiteren symbolischen und beispielhaften Schnittansicht eine Ausgestaltungsvariante einer weiterhin erfindungsgemässen Dicht- und Montageband-Anordnung 100c, die sich dadurch auszeichnet, dass in einem ersten, unteren Bereich 4c eines nach wie vor plastisch dehn- bzw. verformbaren Dicht- und Montageband-Grundkörpers bzw. Trägermaterials Ic, hin zu einer Anschlusswand 6e, exemplarisch ein Schallschutz-Streifen 8a vorgesehen ist. Gegenüberliegend, beispielsweise an der Unterkante einer Wandfliese oder - platte 11b kann optional ein Kapillarschutzstreifen 13 angeordnet sein.

Dadurch, dass der Dicht- und Montageband- Grundkörper bzw. Trägermaterial 1c selbstklebend ist, wird jeweils durchgehend über beide Bereiche eine wannenseitige Klebefläche 21c sowie eine wandseitige Klebefläche 21d ausgeformt.

Alle anderen Komponenten sind aus den bisherigen Figuren bereits bekannt und werden deshalb nicht mehr erwähnt, sondern nur mit fortgeführten Indizes dargestellt.

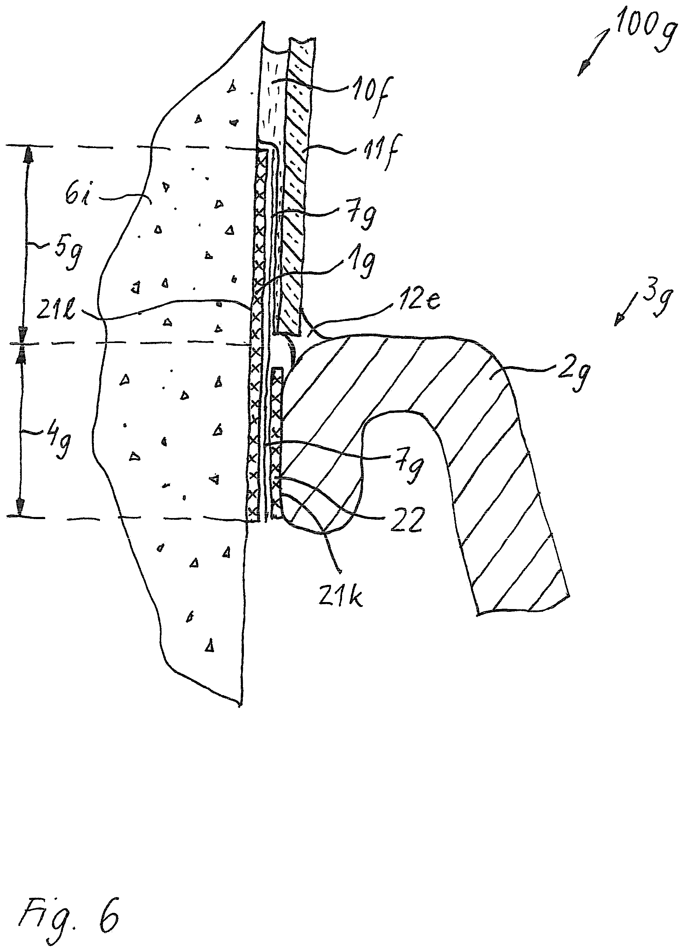

Die Fig. 6 zeigt, erneut im endmontierten Zustand, in einer weiteren symbolischen und beispielhaften Schnittansicht eine Ausgestaltungsvariante einer weiterhin erfindungsgemässen Dichte und Montageband-Anordnung 100g, bei der ein nach wie vor plastisch dehn- bzw. verformbarer Dicht- und Montageband-Grundkörper bzw. Trägermaterial 1g selbstklebend ist und somit direkt mit einer wandseitigen Klebefläche 211 an einer Anschlusswand 6i angeordnet ist. Wannenseitig erstreckt sich dieses Mal eine Deckfolie 7g nicht nur über einen zweiten, oberen Bereich 5g, sondern auch durchgehend über einen ersten, unteren Bereich 4g. Somit ist eine zweite Butyl- oder Kleber-Schicht 22 vorgesehen, die eine wannenseitige Klebefläche 2lk zu einer Wannenabbordung 2g einer Dusch- oder Badewanne 3g ausformt.

Die auf diese Weise im Querschnitt realisierte doppelte Butyl- oder Kleber-Schicht verbessert den Schallschutz, es wäre aber zusätzlich gut möglich, den Schallschutz-Streifen 8a aus der Fig. 5 vorzusehen.

Ansonsten ist wie gehabt eine Fliesenkleberschicht 10f und eine Wandfliese oder -platte 11f überlappend über dem zweiten, oberen Bereich 5g angeordnet und eine Abschluss-Silikonfuge 12e. In einer späteren Figur wird noch eine Ausgestaltungsvariante offenbart, bei der die Fliesenkleberschicht 10f nicht direkt auf die Deckfolie 7g appliziert wird, sondern auf einen überlappenden Vlies-Streifen.

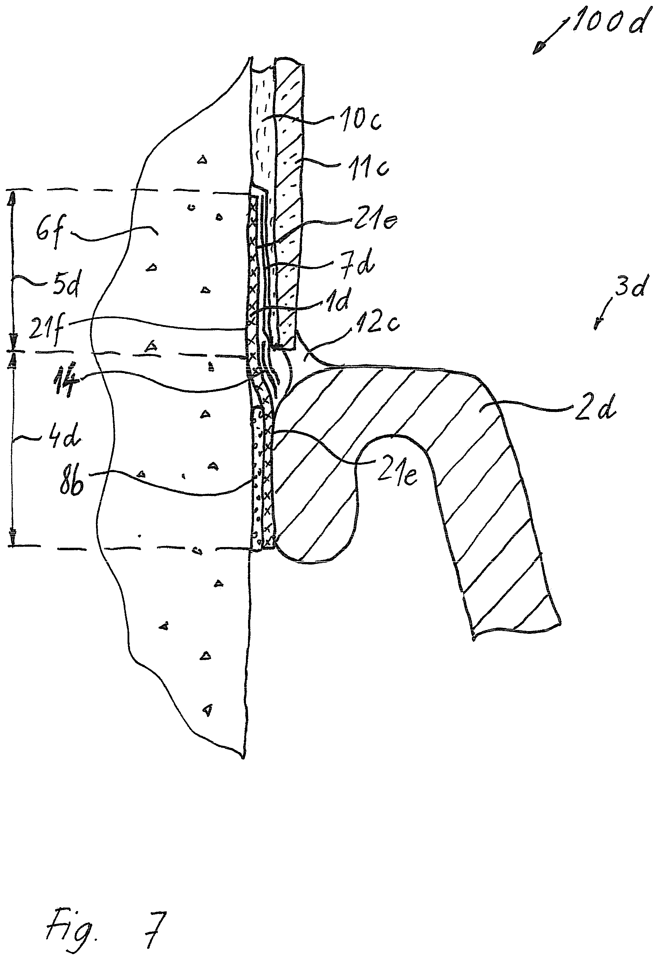

In der Fig. 7 ist im endmontierten Zustand eine Ausgestaltungsvariante einer weiterhin erfindungsgemässen Dicht- und Montageband-Anordnung 100d symbolisch und beispielhaft sowie geschnitten dargestellt, die sich dadurch auszeichnet, dass nach wie vor die aus der Fig. 5 bekannten Komponenten vorhanden sind und deshalb nicht mehr explizit erwähnt, sondern nur mittels der Indizes fortgeführt sind.

Was diese Ausgestaltungsvariante einer weiterhin erfindungsgemässen Dicht- und Montageband-Anordnung 100d jedoch von den bisherigen unterscheidet, ist ein Schnittschutz-Streifen 14, der letztendlich im montierten Zustand rückseitig hinter einer Abschluss-Silikonfuge 12c angeordnet ist. Falls die Abschluss-Silikonfuge 12c entfernt oder erneuert werden muss, wird in der Regel ein Messer oder Teppichmesser verwendet, dass dann auf Widerstand stösst und so ein dahinter liegender Dicht- und Montageband-Grundkörper bzw. Trägermaterial 1d intakt bleibt. Dieser Schnittschutz-Streifen 14 kann ab Werk an einer Klebefläche 21e des in diesem Falle selbstklebenden Dicht- und Montageband-Grundkörpers bzw. Trägermaterials 1d angeklebt sein, oder aber auch nach erfolgter Dehnung eines zweiten, oberen Bereichs 5d des plastisch dehn- bzw. verformbaren Dicht- und Montageband-Grundkörpers bzw. Trägermaterials 1d vor Ort beim Einbau aufgeklebt werden. Eine ebenfalls plastisch dehn- bzw. verformbare Deckfolie 7d kann hierbei den Schnittschutz-Streifen 14 überlappen, so wie dargestellt, oder auch nicht.

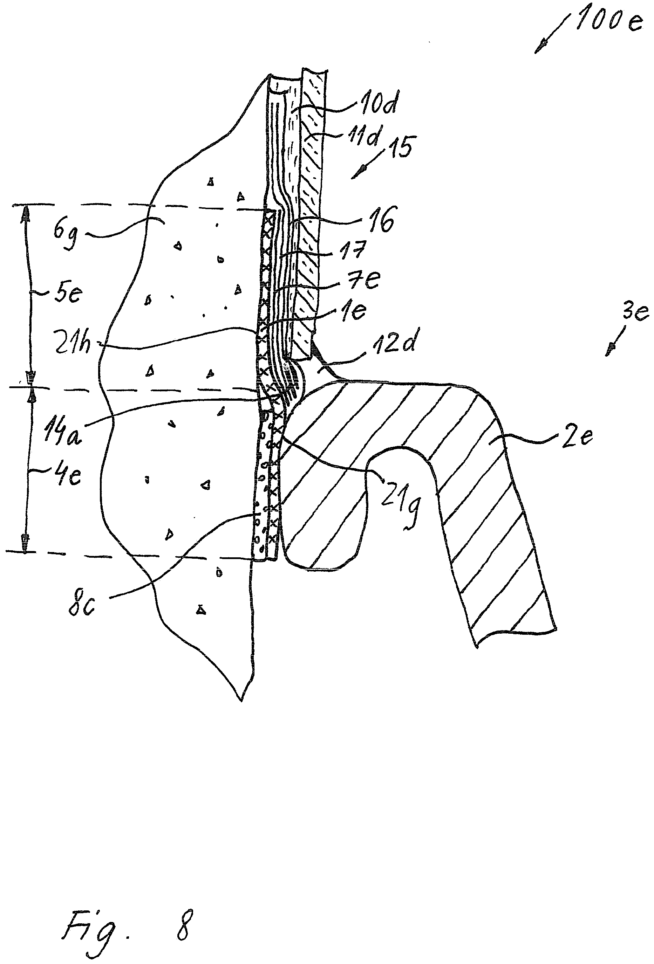

Die Fig. 8 zeigt, erneut im endmontierten Zustand, eine Ausgestaltungsvariante einer weiterhin erfindungsgemässen Dicht- und Montageband-Anordnung 100e, die im Unterschied zu den bisherigen Ausgestaltungsvarianten um einen zweiten, oberen Bereich 5e überlappenden Zusatz-Dichtstreifen 15 ergänzt ist. Dieser Zusatz-Dichtstreifen 15 umfasst vorzugsweise ein Vlies 16 und eine Klebeschicht 17 und hat weiterhin vorzugsweise einen Schnittschutz-Streifen 14a dazwischen eingebettet.

Ansonsten umfasst die Dicht- und Montageband- Anordnung 100e wie gehabt einen plastisch dehn- bzw. verformbaren Dicht- und Montageband-Grundkörper bzw. Trägermaterial 1e, der bzw. das in einem ersten, unteren Bereich 4e wannenseitig direkt an einer Wannenabbordung 2e einer Dusch- oder Badewanne 3e angeklebt ist. Ebenfalls im ersten, unteren Bereich 4e, aber gegenseitig zu einer Anschlusswand 6g hin, ist ein Schallschutz-Streifen 8c angeordnet.

An dem zweiten, oberen Bereich 5e ist wannenseitig nach wie vor eine plastisch dehn- bzw. verformbare Deckfolie 7e angeordnet. Der zweite, obere Bereich 5e des plastisch dehn- bzw. verformbaren Dicht- und Montageband-Grundkörpers bzw. Trägermaterials 1e, aber auch der überlappende Zusatz-Dichtstreifen 15 sind von Fliesenkleber 10d sowie Wandfliesen oder -platten 11d bedeckt. Eine Abschluss-Silikonfuge 12d verbindet den unteren Rand der Wandfliese oder -platte 11d mit der Wannenabbordung 2e.

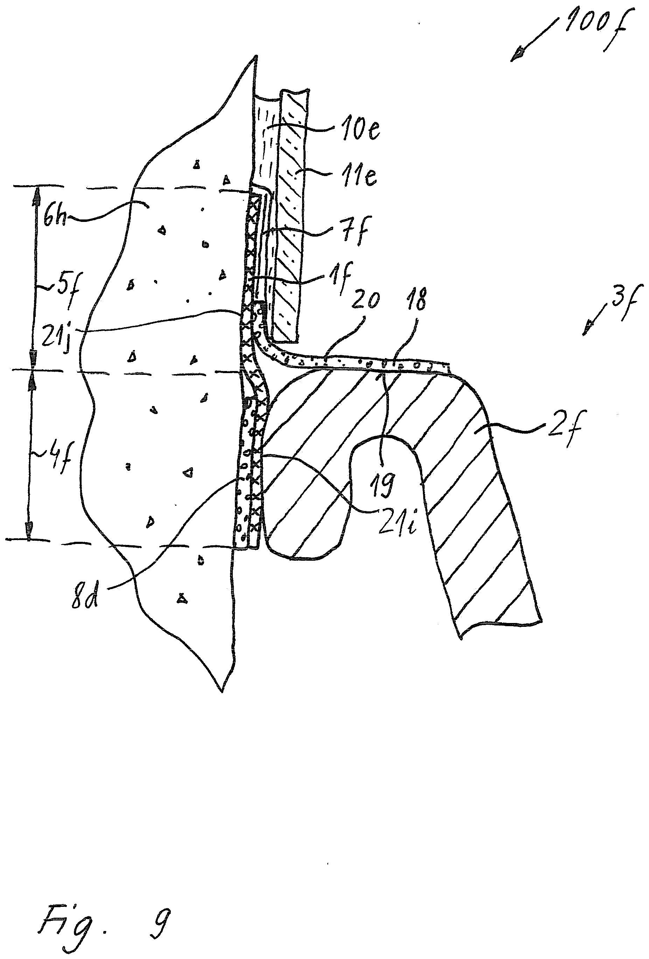

In der Fig. 9 ist, erneut im endmontierten Zustand, eine Ausgestaltungsvariante einer weiterhin erfindungsgemässen Dicht- und Montageband-Anordnung 100f gezeigt, die sich durch einen an einem plastisch dehn- bzw. verformbaren Dicht- und Montageband-Grundkörper bzw. Trägermaterial 1f angeordneten annähernd waagerechten Schutzstreifen 18 auszeichnet. Dieser Schutzstreifen 18 kann, wie dargestellt, mit dem Dicht- und Montageband-Grundkörper bzw. Trägermaterial 1f verklebt sein, aber auch lose Bestandteil eines Dichtband- Anordnungs-Sets sein und dient dem Schutz einer annähernd waagerechten Oberfläche 19 einer Wannenabbordung 2f einer Dusch- oder Badewanne 3f, beim Montieren und beim Fliesenlegen, und kann nach erfolgter Arbeit (aber noch vor dem Verfugen mit einer nicht näher dargestellten Abschluss-Silikonfuge) an einer optionalen Längsperforation 20 abgerissen werden.

Alle restlichen Komponenten dieser Ausgestaltungsvariante sind bereits bekannt und deshalb nur mit entsprechend fortgeführten Indizes in der Fig. 8 dargestellt und hier nicht mehr einzeln aufgeführt.

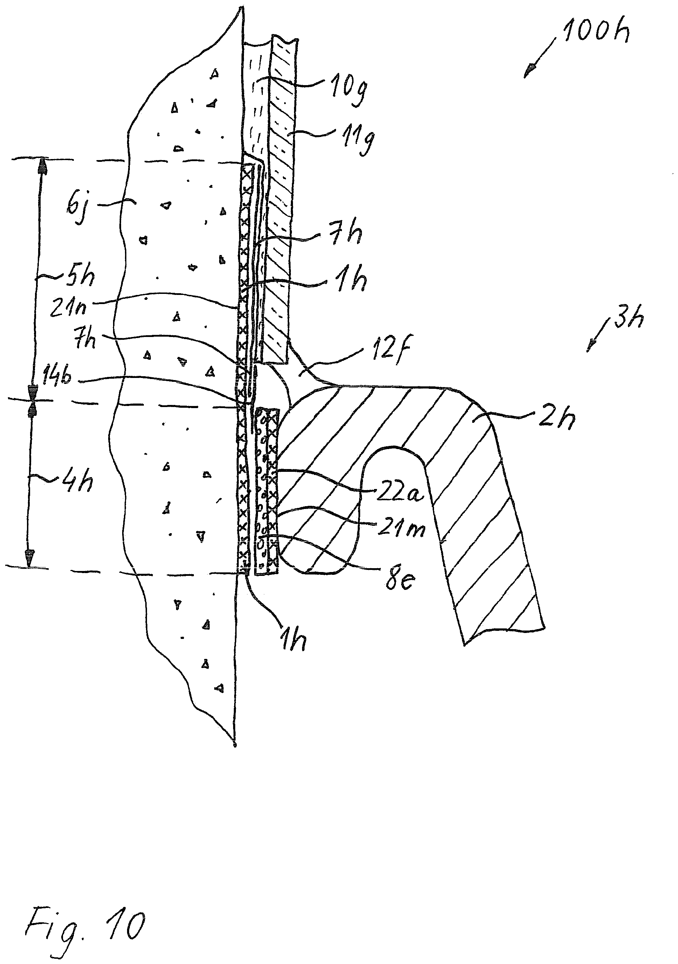

Die Fig. 10 zeigt, erneut im endmontierten Zustand, eine Ausgestaltungsvariante einer weiterhin erfindungsgemässen Dicht- und Montageband-Anordnung 100h, bei der ein nach wie vor plastisch dehn- bzw. verformbarer Dicht- und Montageband-Grundkörper bzw. Trägermaterial 1h selbstklebend ist und somit ohne einer zusätzlichen Klebeschicht direkt mittels einer wandseitigen Klebefläche 21n an einer Anschlusswand 6j angeordnet ist. Wannenseitig ist beispielhaft eine ebenfalls plastisch dehn- bzw. verformbare Deckfolie 7h nur in einem zweiten, oberen Bereich 5h des Dicht- und Montageband- Grundköpers bzw. Trägermaterials 1h vorgesehen, sie kann sich aber auch wie in der Fig. 6 auch über einen ersten, unteren Bereich 4h des Dicht- und Montageband-Grundkörpers bzw. Trägermaterials 1h erstrecken.

Jedenfalls ist bei dieser Ausgestaltungsvariante ein Schallschutz-Streifen 8e nicht mehr an der wandseitigen Rückseite vorgesehen, sondern an der wannenseitigen Vorderseite, beispielhaft direkt angeklebt an dem Dicht- und Montageband- Grundkörper bzw. Trägermaterial 1h in seinem ersten, unteren Bereich 4h. Der dargestellte Luftspalt dazwischen darf übrigens nicht verwirren und ist im konkreten Fall den Handzeichnungen geschuldet. Quasi im Nachgang und der guten Ordnung halber sei erwähnt, dass in allen Figuren dünne Folien und Materialien teilweise nur mit einer Linie dargestellt sind und wenn kein fiktiver Luftspalt - obwohl die Materialien miteinander verklebt sind - gezeichnet werden würde, dann könnte man diese Materialien nicht erkennen. Die jeweilige Verklebung ergibt sich aus dem beschriebenen Kontext.

Des Weiteren ist eine zweite Butyl- oder Kleber- Schicht 22a angeordnet, die eine wannenseitige Klebefläche 21m zu einer Wannenabbordung 2h einer Dusch- oder Badewanne 3h ausformt.

Falls, wie oben erwähnt, die Deckfolie 7h sich auch über den ersten, unteren Bereich 4h erstreckt, kann eine zweite Butyl- oder Kleber-Schicht die Verbindung zwischen dem Dicht- und Montageband-Grundkörper bzw. Trägermaterial 1h und dem Schallschutz-Streifen 8e erzeugen und dann wird die dargestellte zweite Butyl- oder Kleber-Schicht 22a zu einer dritten.

Vorzugsweise wie dargestellt nur teilweise gefasst, kann ein Schnittschutz-Streifen 14b zwischen den beschriebenen Schichten angeordnet sein. Optional oder vorzugsweise so, dass .ein oberer Bereich des Schnittschutz-Streifens 14b frei auf der nicht klebenden Deckfolie 7h gleiten kann, wenn der zweite, obere Bereich 5h des plastisch dehn- bzw. verformbaren Dicht- und Montageband-Grundkörpers bzw. Trägermaterials 1h gedehnt und verformt wird.

Ansonsten überlappt eine Fliesenkleberschicht 10g und eine Wandfliese oder - platte 11g wie gehabt den zweiten, oberen Bereich 5h, aber auch hier sei ausdrücklich darauf hingewiesen, dass eine Kombination mit der Ausgestaltungsvariante einer erfindungsgemässen Dicht- und Montageband-Anordnung 100e aus der Fig. 8 gut möglich ist, bei 5 der unterhalb des Fliesenklebers 10g bzw. dort 10d ein überlappender Zusatz-Dichtstreifen 15 vorgesehen ist.

Die obigen Ausführungen zu den Figuren 1 bis 10 gelten auch für die nicht plastisch verformbaren Dicht- und Montageband-Grundkörper bzw. Trägermaterialien.

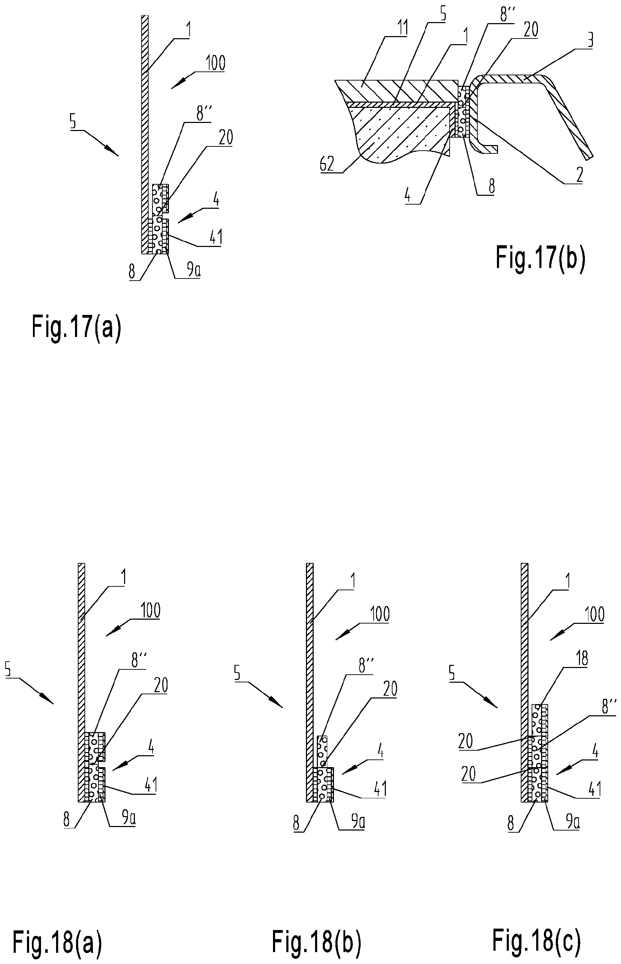

Fig. 17(a) zeigt eine schematische Schnittdarstellung einer Dicht- und Montageband-Anordnung mit Schallschutzstreifen. Fig. 17(b) zeigt die Dicht- und Montageband-Anordnung aus Fig. 17(a) im Einbauzustand. Die Dicht- und Montageband-Anordnung 100 weist im ersten, unteren Bereich 4 einbaugegenstandseitig einen Schallschutzstreifen 8 auf, welcher mit einer einbaugegenstandseitigen Klebeschicht 9a zur Befestigung an einem Einbaugegenstand 3 versehen ist. Die Klebeschicht 9a kann mit einem Abziehstreifen 41 versehen sein. In der in Fig. 17(a) gezeigten Ausführungsform ist der Schallschutz-Streifen 8 lediglich mit einem unteren Bereich auf den Dicht- und Montageband-Grundkörper resp. auf das Trägermaterial 1 geklebt. Der obere Bereich des Schallschutz-Streifens 8" ist gegenüber dem Dicht- und Montageband-Grundkörper resp. dem Trägermaterial 1 frei von Kleber, so dass der Grundkörper resp. das Trägermaterial 1 bei der Montage von diesem wegklappbar ist. D.h. der obere Bereich des Schallschutz-Streifens 8" überlappt im nicht eingebauten Zustand mit dem zweiten, oberen Bereich 5 des Dicht- und Montageband-Grundkörpers resp. des Trägermaterial 1. In einem eingebauten Zustand, wie beispielsweise in Fig. 17(b) gezeigt, kann die Dicht- und Montageband-Anordnung 100 mit dem ersten, unteren Bereich 4 vertikal an einer Abbordung 2 eines Einbaugegenstands 3 befestigt sein. Der zweite, obere Bereich 5 kann bei der Montage umgelegt und horizontal auf einem Anschlussboden 62 befestigt sein. Dabei reicht der obere Bereich des Schallschutz-Streifens 8" entlang der Abbordung 2 vertikal nach oben über den Anschlussboden 62 hinaus und dient als Anlagefläche und Schallentkopplung für auf dem Anschlussboden 62 verlegte Fliesen 11. Der Schallschutz-Streifen 8 kann derart bemessen sein, dass zwischen Fliese 11 und Abbordung 2 genügend Platz für eine Silikonfugenabdichtung (nicht gezeigt) verbleibt.

Der Schallschutz-Streifen 8 kann zwischen unterem und oberen Bereich eine Längsperforation 20 oder sonstige Schwächung aufweisen, so dass der obere Bereich des Schalldämm-Streifens 8" bei Bedarf einfach abtrennbar ist. Die Klebeschicht 9a kann vollflächig aufgetragen sein. Alternativ kann im Bereich der Längsperforation resp. Schwächung 20 ein kleberfreier Bereich vorhanden sein.

Fig. 18 zeigt unter (a) bis (c) weitere Varianten einer Dicht- und Montageband-Anordnung mit Schallschutzstreifen in schematischen Schnittdarstellungen.

In Fig. 18(a) ist der Schallschutz-Streifen 8 im Unterschied zur Ausführungsform der Fig. 17(a) vollflächig auf dem Dicht- und Montageband-Grundkörper resp. dem Trägermaterial 1 aufgeklebt. Zwischen dem oberen Bereich des Schallschutzstreifens 8" und dem Kleber kann ein Abziehstreifen resp. eine Silikonpapier-Streifen vorhanden sein.

In Fig. 18(b) weist der Schallschutz-Streifen 8 im Unterschied zur Ausführungsform der Fig. 17(a) lediglich im unteren Bereich eine einbaugegenstandseitige Kleberschicht 9a auf. Der obere Bereich 8" ist frei von Kleber.

In Fig. 18(b) weist der Schallschutz-Streifen 8 im Unterschied zur Ausführungsform der Fig. 17(a) einen unteren Bereich, einen mittleren Bereich 8" und einen oberen Bereich auf, welche jeweils mittels Längsperforationen 20 voneinander abtrennbar sind. Der obere Bereich dient bei der Montage als waagrechter Schutzstreifen 18 zum Schutz des Einbaugegenstands 3 - wie dies beispielsweise unter Fig. 9 beschrieben ist. Der mittlere Bereich entspricht dem oberen Bereich des Schallschutz-Streifen wie unter Fig. 17(a) beschrieben. Wenigstens der untere Bereich ist auf dem Dicht- und Montageband-Grundkörper resp. dem Trägermaterial 1 aufgeklebt. Der mittlere und obere Bereich können gegenüber dem Dicht- und Montageband-Grundkörper resp. dem Trägermaterial kleberfrei sein.

Die Ausführungsform der Fig. 17(a) kann auch horizontal eingebaut werden, wobei dann der obere Bereich des Schallschutzstreifens 8" als waagrechter Schutzstreifen 18 zum Schutz des Einbaugegenstands dienen kann.

Die anhand den Figuren 17 und 18 beschriebenen Ausführungsformen können in Bezug auf den Schallschutz-Streifen auch als eigenständige Erfindungen betrachtet werden - d.h. unabhängig vom Material des Dicht- und Montageband-Grundkörpers. Auch können diese Ausführungsformen mit weiteren voran beschriebenen Elementen wie beispielsweise Schnittschutz-Streifen oder -bänder, Kapillarschutzstreifen, Klebebänder oder -flächen, Abdeckbänder oder -folien, Vliese, textile Flächengebilde oder Armierungsbänder kombiniert sein.

### Bezeichnungsliste

- 1, 1a-1h: (plastisch) dehn- bzw. verformbarer Dicht- und Montageband-Grundkörper bzw. Trägermaterial
- 2, 2a-2h: Abbordung, Wannenabbordung
- 3, 3a-3h: Einbaugegenstand, Dusch- oder Badewanne
- 4, 4a-4h: erster bzw. unterer Bereich von 1
- 5, 5a-5h: zweiter bzw. oberer Bereich von 1
- 6a: erste Anschlusswand
- 6b: zweite Anschlusswand
- 6c-6j: Anschlusswand
- 7, 7a-7h: (plastisch) dehn- bzw. verformbare Deckfolie
- 8, 8a-8e: Schallschutz-Streifen
- 8': zweiter Schallschutz-Streifen
- 8": oberer / mittlerer Bereich des Schallschutz-Streifens 8
- 9a, 9b: (separate) Klebeschicht, (separate) Klebefläche
- 10, 10a-10g: Fliesenkleber
- 11, 11a-11g: Wandfliese oder -platte; Bodenfliese oder -platte
- 12, 12a-12f: Abschluss-Silikonfuge
- 13: Kapillarschutzstreifen
- 14, 14a, 14b: Schnittschutz-Streifen
- 14': erster Schenkel
- 14": zweiter Schenkel
- 15: überlappender Zusatz-Dichtstreifen
- 16: Vlies
- 17: Klebeschicht
- 18: waagerechter Schutzstreifen
- 19: waagerechte Oberfläche von 2f
- 20: Längsperforation
- 21a, 21c, 21e, 21g, 21i, 21k, 21m: einbaugegenstand- resp. wannenseitige Klebefläche
- 21b, 21d, 21f, 21h, 21j, 21l, 21n: wandseitige Klebefläche
- 22, 22a: zweite Butyl- oder Kleber-Schicht
- 41: Abziehstreifen
- 51: Abziehstreifen
- 61: Anschlusswand
- 62, 62': Anschlussboden
- 70: Eckebereich Boden-Boden
- 70': Übergang Wand-Boden
- 71: Eckstück
- 80: Rundung Wannenecke
- 81: Abdichtprofile oder -elemente
- 90: Verbundabdichtung

- 100, 100a-100f: Dicht- und Montageband, Dicht- und Montageband-Anordnung
- E: Eck gebildet von 6a und 6b
- R: Richtung

## Patentansprüche

1. Dicht- und Montageband-Anordnung (100, 100a-100h) für das Setzen eines Einbaugegenstands, vorzugsweise einer Dusch- oder Badewanne (3, 3a-3h), an mindestens eine Anschlusswand (61, 6a-6j) oder mindestens einen Anschlussboden (62), mit einem Dicht- und Montageband-Grundkörper bzw. Trägermaterial (1, 1a-1h), der bzw. das einen ersten, unteren Bereich (4, 4a-4h) ausformt mit einer einbaugegenstandseitigen resp. wannenseitigen Klebefläche (9a, 21a, 21c, 2le, 21g, 21i, 21k, 21m) hin zu einer Abbordung (2, 2a-2h) des Einbaugegenstands, vorzugsweise der Dusch- oder Badewanne (3, 3a-3h), und einen zweiten, oberen Bereich (5, 5a-5h) mit einer wand- oder bodenseitigen Klebefläche (9b, 21b, 21d, 21f, 21h, 21j, 21l, 21n) hin zu der mindestens einen Anschlusswand (61, 6a-6j) oder dem mindestens einen Anschlussboden (62), **dadurch gekennzeichnet, dass** der Dicht- und Montageband-Grundkörper bzw. das Trägermaterial (1, 1a-1h) aus einem in beliebige Richtungen (R) derart dehn- und verformbaren Material mit einer Dehnbarkeit in Quer- und Längsrichtung von mindestens 200 %, vorzugsweise 500 % - 1200 %, weiter vorzugsweise etwa 1000 %, besteht, so dass die Dicht- und Montagband-Anordnung (100, 100a-100h) nach Befestigung des ersten, unteren Bereichs (4, 4a-4h) entlang oder um eine Ecke (80) der Abbordung (2, 2a-2h) der zweite, obere Bereich (5, 5a-5h) in beliebige Richtung vom Einbaugegenstand (3, 3a-3h) weg über Boden-Boden-Eckbereiche (70) oder Wand-Boden-Übergänge (70') dehnbar und befestigbar ist.

2. Dicht- und Montageband-Anordnung (100, 100a-100h) nach Anspruch 1, **dadurch gekennzeichnet, dass** der Dicht- und Montagband-Grundkörper bzw. das Trägermaterial (1, 1a-1h) aus plastisch dehn- und verformbarem Material besteht und dass eine durchgehend-einstückige, einbaugegenstandseitig resp. wannenseitig mindestens an dem zweiten, oberen Bereich (5, 5a-5h) angeordnete Deckfolie (7, 7a-7h) ebenfalls plastisch dehn- und verformbar ist.

3. Dicht- und Montageband-Anordnung (100, 100a-100h) nach Anspruch 1, **dadurch gekennzeichnet, dass** das in beliebige Richtung dehn- und verformbare Material elastisch dehn- und verformbar ist, wobei die einbaugegenstand- resp. wannenseitige Klebefläche (9a, 21a, 21c, 2le, 21g, 21i, 21k, 21m) und die wandseitige Klebefläche (9b, 21b, 21d, 21f, 21h, 21j, 21l, 21n) eine genügende Haftung auf dem Einbaugegenstand (3, 3a-3h) resp. auf der/dem Anschlusswand/-boden (61, 6a-6j, 62) aufweisen, um im eingebauten Zustand der durch die Elastizität entstehenden Rückstellkraft entgegenzuwirken.

4. Dicht- und Montageband-Anordnung (100, 100a-100h) nach einem der vorhergehenden Ansprüche, **dadurch gekennzeichnet, dass** an dem ersten, unteren Bereich (4, 4a-4f) einbaugegenstand- resp. wannenseitig mindestens ein Klebe-Streifen (9a) angeordnet ist und/oder dass die wand- oder bodenseitige Klebefläche (9b, 21b, 21d, 21f, 21h, 21j, 21l, 21n) des Dicht- und Montagband-Grundkörpers bzw. des Trägermaterials (1, 1a-1h) vollflächig über dem zweiten, oberen Bereich angeordnet ist und optional auch den ersten, unteren Bereich (4, 4a-4h) abdeckt.

5. Dicht- und Montageband-Anordnung (100, 100a-100h) nach einem der vorhergehenden Ansprüche, **dadurch gekennzeichnet, dass** der Dicht- und Montagband-Grundkörper bzw. das Trägermaterial (1, 1a-1h) in einem oder mehreren Bereichen eine die Dehn- und Verformbarkeit einschränkende Kaschierung aufweist und nur in einem Teilbereich in beliebige Richtung dehn- und verformbar ist.

6. Dicht- und Montageband-Anordnung (100, 100a-100h) nach einem der vorhergehenden Ansprüche, **dadurch gekennzeichnet, dass** das Material des Dicht- und Montageband-Grundkörpers bzw. Trägermaterials (1, 1b-1h) selbstklebend ist und die Klebeflächen (21a, 21c, 2le, 21g, 21i, 21k, 21m; 21b, 2ld, 21f, 21h, 21j, 211, 21n) selbst ausformt.

7. Dicht- und Montageband-Anordnung (100, 100c-100h) nach einem der vorhergehenden Ansprüche, **dadurch gekennzeichnet, dass** an dem ersten, unteren Bereich (4, 4a-4f) wand- oder/und wannenseitig mindestens ein Schallschutz-Streifen (8, 8a-8e) angeordnet ist.

8. Dicht- und Montageband-Anordnung (100e) nach einem der vorhergehenden Ansprüche, **dadurch gekennzeichnet, dass** der zweite, obere Bereich (5e) des Dicht- und Montageband-Grundkörpers (1e) von einem Zusatz-Dichtstreifen (15) wannenseitig überlappt ist.

9. Dicht- und Montageband-Anordnung (100d, 100e, 100h) nach einem der vorhergehenden Ansprüche, **dadurch gekennzeichnet, dass** die Dicht- und Montageband-Anordnung (100d, 100e, 100h) mindestens einen Schnittschutz-Streifen (14, 14a, 14b) umfasst.

10. Dicht- und Montageband-Anordnung (100c) nach einem der vorhergehenden Ansprüche, **dadurch gekennzeichnet, dass** die Dicht- und Montageband-Anordnung (100c) mindestens einen Kapillarschutzstreifen (13) umfasst.

11. Dicht- und Montageband-Anordnung (l00f) nach einem der vorhergehenden Ansprüche, **dadurch gekennzeichnet, dass** die Dicht- und Montageband-Anordnung (100f) einen waagerechten Schutzstreifen (18) umfasst, der auf einer waagerechten Oberfläche (19) der Wannenabbordung (2f) ausbreit- oder anklebbar ist.

12. Dicht- und Montageband-Anordnung (100g) nach einem der vorhergehenden Ansprüche, **dadurch gekennzeichnet, dass** die Deckfolie (7g) auch an dem ersten, unteren Bereich (4g) angeordnet ist und die Dichtband-Anordnung (100g) im Querschnitt mindestens eine zweite Butyl- oder Kleber-Schicht (22, 22a) umfasst.

13. Verfahren zum Setzen einer Dusch- oder Badewanne (3, 3a-3h) bzw. zur Verwendung einer Dicht- und Montageband-Anordnung (100, 100a-100h) nach einem der vorhergehenden Ansprüche, mit einem plastisch dehn- bzw. verformbaren Dicht- und Montageband- Grundkörper bzw. Trägermaterial (1, 1a-1h) und mit einer ebenfalls plastisch dehn- bzw. verformbaren, mindestens an einem zweiten, oberen Bereich (5, 5a-5h) des Dicht- und Montageband-Grundkörpers bzw. Trägermaterials (1, 1a-1h) wannenseitig angeordneten Deckfolie (7, 7a-7h); **dadurch gekennzeichnet, dass** folgende Verfahrensschritte ausgeführt werden:
a) Abziehen eines ersten Silikonpapier-Streifens von einem ersten, unteren Bereich (4, 4a-4h) des Dicht- und Montageband-Grundkörpers bzw. Trägermaterials (1, 1a-1h);
b) Ankleben des ersten, unteren Bereichs (4, 4a-4h) des Dicht- und Montageband-Grundkörpers bzw. Trägermaterials (1, 1a-1h) an einer Wannenabbordung (2, 2a-2h) der Dusch- oder Badewanne (3, 3a-3h);
c) Setzen der Dusch- oder Badewanne (3, 3a-3h) in ein Eck (E) gebildet aus einer ersten Anschlusswand (6a) und einer zweiten Anschlusswand (6b) oder an mindestens einen Anschlussboden oder an mindestens einen Wandübergang;
d) Abziehen eines zweiten Silikonpapier-Streifens von dem zweiten, oberen Bereich (5, 5a-5h) des Dicht- und Montagabend« Grundkörpers bzw. Trägermaterials (1, 1a-1h);
e) Ankleben des zweiten, oberen Bereichs (5, 5a-5h) des Dicht- und Montageband-Grundkorpers bzw. Trägermaterials (1, 1a-1h) an der ersten Anschlusswand (6a) und an der zweiten Anschlusswand (6b) oder an mindestens einen Anschlussboden oder an mindestens einen Wandübergang;
f) Dehnen, Verformen und Anbringen des zweiten, oberen Bereichs (5, 5a-5h) des Dicht- und Montageband-Grundkörpers bzw. Trägermaterials (1, 1a-1h) hinein in das Eck (E) gebildet aus der ersten Anschlusswand (6a) und der zweiten Anschlusswand (6b) oder an den Anschlussboden oder Kombinationen hiervon;
g) falls vorgesehen, Ausbreiten, oder falls wiederum vorgesehen, Ankleben eines waagerechten Schutzstreifens (18) an einer waagerechten Oberfläche (19) der Wannenabbordung (2f);
h) falls vorgesehen, Abziehen eines dritten und vierten Silikonpapier-Streifens von der wandseitigen Rückseite eines Zusatz-Dichtstreifens (15);
i) falls vorgesehen, Ankleben eines Zusatz-Dichtstreifens (15) überlappend über den zweiten, oberen Bereich (5, 5a-5h) des Dicht- und Montageband-Grundkörpers bzw. Trägermaterials (1, 1a-1h);
j) Verlegen von Wandfliesen oder -platten (11, 11a-11g) überlappend über den zweiten, oberen Bereich (5, 5a-5h) des Dicht- und Montageband-Grundkörpers bzw. Trägermaterials (1, 1a-1h);
k) falls vorgesehen, Abreissen des waagerechten Schutzstreifens (18) an einer Längsperforation (20);
l) Verfugen mit einer Abschluss-Silikonfuge (12, 12a-12f) zwischen dem unteren Rand der Wandfliesen oder -platten (11, 11a-11g) und der Wannenabbordung (2, 2a-2h).

14. Verwendung einer Dicht- und Montageband-Anordnung (100, 100a-100h) nach einem der vorhergehenden Ansprüche für das Setzen eines Einbaugegenstands, insbesondere einer Dusch-, Whirl- oder Badewanne (3, 3a-3h) an mindestens eine Anschlusswand (61, 6a-6j) oder mindestens einen Anschlussboden (62) und für das Abdichten von Übergängen eines Einbaugegenstands zu Eckbereichen von Anschlusswänden (61, 6a-6j) und/oder -böden (62).

## Claims

1. A sealing and mounting tape arrangement (100, 100a-100h) for setting an installation object, preferably a shower or bathtub (3, 3a-3h), against at least one connecting wall (61, 6a-6j) or at least one connecting floor (62), with a sealing and mounting base body or carrier material (1, 1a-1h), which forms a first, lower region (4, 4a-4h) with an installation object- or tub-side adhesive surface (9a, 21a, 21c, 21e, 21g, 21i, 21k, 21m) toward a downward flange (2, 2a-2h) of the installation object, preferably the shower or bathtub (3, 3a-3h), and a second, upper region (5, 5a-5h) with a wall- or floor-side adhesive surface (9b, 21b, 21d, 21f, 21h, 21j, 211, 21n) toward the at least one connecting wall (61, 6a-6j) or the at least one connecting floor (62), **characterized in that** the sealing and mounting tape base body or the carrier material (1, 1a-1h) consists of a material that can be stretched and deformed in any directions (R) with a stretchability in the transverse and longitudinal direction of at least 200%, preferably 500% - 1200%, further preferably about 1000%, so that the sealing and mounting tape arrangement (100, 100a-100h), once the first, lower region (4, 4a-4h) has been fastened along or around a corner (80) of the downward flange (2, 2a-2h), the second, upper region (5, 5a-5h) can be stretched in any direction away from the installation object (3, 3a-3h) over the floor-floor corner regions (70) or wall-floor transitions (70') and fastened.

2. The sealing and mounting tape arrangement (100, 100a-100h) according to claim 1, **characterized in that** the sealing and mounting tape base body or the carrier material (1, 1a-1h) consists of plastically stretchable and deformable material, and that a continuous one-piece cover film (7, 7a-7h) arranged on the installation side or tub side against at least the second, upper region (5, 5a-5h) is likewise plastically stretchable and deformable.

3. The sealing and mounting tape arrangement (100, 100a-100h) according to claim 1, **characterized in that** the material that can be stretched and deformed in any direction is elastically stretchable and deformable, wherein the installation object- or tub-side adhesive surface (9a, 21a, 21c, 21e, 21g, 21i, 21k, 21m) and the wall-side adhesive surface (9b, 21b, 21d, 21f, 21h, 21j, 211, 21n) have sufficient adhesion to the installation object (3, 3a-3h) or to the connecting wall/floor (61, 6a-6j, 62) to counteract the restoring force caused by the elasticity in the installed state.

4. The sealing and mounting tape arrangement (100, 100a-100h) according to one of the preceding claims, **characterized in that** at least one adhesive strip (9a) is arranged on the first, lower region (4, 4a-4f) on the installation side or wall side, and/or that the wall- or floor-side adhesive surface (9b, 21b, 21d, 21f, 21h, 21j, 211, 21n) of the sealing and mounting tape base body or the carrier material (1, 1a-1h) is arranged over the entire surface of the second, upper region, and optionally also covers the first, lower region (4, 4a-4h).

5. The sealing and mounting tape arrangement (100, 100a-100h) according to one of the preceding claims, **characterized in that** the sealing and mounting base body or the carrier material (1, 1a-1h) has a lamination that limits the stretchability and deformability in one or several regions, and can only be stretched and deformed in any direction in a partial region.

6. The sealing and mounting tape arrangement (100, 100a-100h) according to one of the preceding claims, **characterized in that** the material of the sealing and mounting tape base body or carrier material (1, 1b-1h) is self-adhesive, and itself forms the adhesive surfaces (21a, 21c, 21e, 21g, 21i, 21k, 21m; 21b, 21d, 21f, 21h, 21j, 211, 21n).

7. The sealing and mounting tape arrangement (100, 100c-100h) according to one of the preceding claims, **characterized in that** at least one soundproofing strip (8, 8a-8e) is arranged on the first, lower region (4, 4a-4f) on the wall- and/or tub side.

8. The sealing and mounting tape arrangement (100e) according to one of the preceding claims, **characterized in that** the second, upper region (5e) of the sealing and mounting base body (1e) is overlapped on the tub side by an additional sealing strip (15).

9. The sealing and mounting tape arrangement (100d, 100e, 100h) according to one of the preceding claims, **characterized in that** the sealing and mounting arrangement (100d, 100e, 100h) comprises at least one cut protection strip (14, 14a, 14b).

10. The sealing and mounting tape arrangement (100c) according to one of the preceding claims, **characterized in that** the sealing and mounting arrangement (100c) comprises at least one capillary protection strip (13).

11. The sealing and mounting tape arrangement (100f) according to one of the preceding claims, **characterized in that** the sealing and mounting tape arrangement (100f) comprises a horizontal protective strip (18), which can be spread out or adhesively bonded on a horizontal surface (19) of the flange (2f).

12. The sealing and mounting tape arrangement (100g) according to one of the preceding claims, **characterized in that** the cover film (7g) is also arranged on the first, lower region (4g), and the sealing tape arrangement (100g) cross sectionally comprises at least one second butyl- or adhesive layer (22, 22a).

13. A method for setting a shower or bathtub (3, 3a-3h) or for using a sealing and mounting tape arrangement (100, 100a-100h) according to one of the preceding claims, with a plastically stretchable or deformable sealing and mounting tape base body or carrier material (1, 1a-1h), and with a likewise plastically stretchable or deformable cover film (7, 7a-7h) arranged on the tub side against at least a second, upper region (5, 5a-5h) of the sealing and mounting tape base body or carrier material (1, 1a-1h); **characterized in that** the following procedural steps are performed:
a) Peeling a first silicone paper strip from a first, lower region (4, 4a-4h) of the sealing and mounting tape base body or carrier material (1, 1a-1h);
b) Adhesively bonding the first, lower region (4, 4a-4h) of the sealing and mounting tape base body or carrier material (1, 1a-1h) to a tub downward flange (2, 2a-2h) of the shower or bathtub (3, 3a-3h) ;
c) Setting the shower or bathtub (3, 3a-3h) in a corner (E) comprised of a first connecting wall (6a) and a second connecting wall (6b) or on at least one connecting floor or on at least one wall transition;
d) Peeling a second silicone paper strip from the second, upper region (5, 5a-5h) of the sealing and mounting strip base body or carrier material (1, 1a-1h) ;
e) Adhesively bonding the second, upper region (5, 5a-5h) of the sealing and mounting tape base body or carrier material (1, 1a-1h) to the first connecting wall (6a) and to the second connecting wall (6b) or to at least one connecting floor or to at least one wall transition;
f) Stretching, deforming and attaching the second, upper region (5, 5a-5h) of the sealing and mounting tape base body or carrier material (1, 1a-1h) into the corner (E) comprised of the first connecting wall (6a) and the second connecting wall (6b) or on the connecting floor or combinations thereof;
g) If provided, spreading, or if in turn provided, adhesively bonding a horizontal protective strip (18) to a horizontal surface (19) of the tub flange (2f);
h) If provided, peeling a third and fourth silicone paper strip from the wall-side rear side of an additional sealing strip (15);
i) If provided, adhesively bonding an additional sealing strip (15) that overlaps the second, upper region (5, 5a-5h) of the sealing and mounting tape base body or carrier material (1, 1a-1h);
j) Laying wall tiles or plates (11, 11a-11g) that overlap the second, upper region (5, 5a-5h) of the sealing and mounting tape base body or carrier material (1, 1a-1h);
k) If provided, tearing the horizontal protective strip (18) over a longitudinal perforation (20);
l) Grouting with a silicone finishing joint (12, 12a-12f) between the lower edge of the wall tiles or plates (11, 11a-11g) and the tub shelf (2, 2a-2h).

14. Use of a sealing and mounting tape arrangement (100, 100a-100h) according to one of the preceding claims for setting an installation object, in particular a shower, whirlpool or bathtub (3, 3a-3h) against at least one connecting wall (61, 6a-6j) or at least one connecting floor (62), and for sealing transitions between an installation object and corner regions of connecting walls (61, 6a-6j) and/or floors (62).

## Revendications

1. Ensemble de bande d'étanchéité et de montage (100, 100a-100h) destiné à la pose d'un élément à installer, de préférence un bac de douche ou une baignoire (3, 3a-3h), sur au moins une paroi de raccordement (61, 6a-6j) ou au moins un sol de raccordement (62), avec un corps de base de bande d'étanchéité et de montage ou un matériau de support (1, 1a-1h), lequel forme une première région inférieure (4, 4a-4h) avec une surface de collage côté élément à installer ou côté bac (9a, 21a, 21c, 21e, 21g, 21i, 21k, 21m), laquelle est tournée vers une retombée (2, 2a-2h) de l'élément à installer, de préférence du bac de douche ou de la baignoire (3, 3a-3h), et une deuxième région supérieure (5, 5a-5h) avec une surface de collage côté paroi ou côté sol (9b, 21b, 21d, 21f, 21h, 21j, 21l, 21n), laquelle est tournée vers l'au moins une paroi de raccordement (61, 6a-6j) ou l'au moins un sol de raccordement (62), **caractérisé en ce que** le corps de base de bande d'étanchéité et de montage ou le matériau de support (1, 1a-1h) est constitué d'un matériau extensible et déformable dans toutes les directions (R), avec une extensibilité dans la direction transversale et longitudinale d'au moins 200%, avantageusement de 500% à 1200%, et plus avantageusement encore d'environ 1000%, de sorte que l'ensemble de bande d'étanchéité et de montage (100, 100a-100h), après fixation de la première région inférieure (4, 4a-4h) le long d'un coin (80) de la retombée (2, 2a-2h) ou autour de celui-ci, la deuxième région supérieure (5, 5a-5h) peut être étirée et fixée dans n'importe quelle direction à distance de l'élément à installer (3, 3a-3h), sur des régions sol-sol-coin (70) ou des transitions paroi-sol (70').

2. Ensemble de bande d'étanchéité et de montage (100, 100a-100h) selon la revendication 1, **caractérisé en ce que** le corps de base de bande d'étanchéité et de montage ou le matériau de support (1, 1a-1h) est constitué d'un matériau plastiquement extensible et déformable et **en ce qu'**un film de revêtement (7, 7a-7h) continu en une seule pièce, disposé sur la deuxième région supérieure (5, 5a-5h) côté élément à installer ou côté bac est également plastiquement extensible et déformable.

3. Ensemble de bande d'étanchéité et de montage (100, 100a-100h) selon la revendication 1, **caractérisé en ce que** le matériau extensible et déformable dans toutes les directions est extensible et déformable élastiquement, dans lequel la surface de collage côté élément à installer ou côté bac (9a, 21a, 21c, 21e, 21g, 21i, 21k, 21m) et la surface de collage côté paroi (9b, 21b, 21d, 21f, 21h, 21j, 21l, 21n) présentent une adhérence suffisante sur l'élément à installer (3, 3a-3h) ou sur la paroi / le sol de raccordement (61, 6a-6j), pour agir contre la force de rappel induite par l'élasticité dans l'état monté.

4. Ensemble de bande d'étanchéité et de montage (100, 100a-100h) selon l'une des revendications précédentes, **caractérisé en ce qu'**au moins un ruban adhésif (9a) est disposé côté élément à installer ou côté bac sur la première région inférieure (4, 4a-4f) et/ou **en ce que** la surface de collage côté paroi ou sol (9b, 21b, 21d, 21f, 21h, 21j, 21l, 21n) du corps de base de bande d'étanchéité et de montage ou du matériau de support (1, 1a-1h) est disposée sur toute la surface de la deuxième région supérieure et recouvre optionnellement également la première région inférieure (4, 4a-4h).

5. Ensemble de bande d'étanchéité et de montage (100, 100a-100h) selon l'une des revendications précédentes, **caractérisé en ce que** le corps de base de bande d'étanchéité et de montage ou le matériau de support (1, 1a-1h) présente un parement limitant l'extensibilité et la déformabilité dans une ou plusieurs régions et n'est extensible et déformable dans toutes les directions que dans une région partielle.

6. Ensemble de bande d'étanchéité et de montage (100, 100a-100h) selon l'une des revendications précédentes, **caractérisé en ce que** le matériau du corps de base de bande d'étanchéité et de montage ou le matériau de support (1, 1a-1h) est autocollant et forme les surfaces de collage (21a, 21c, 21e, 21g, 21i, 21k, 21m ; 21b, 21d, 21f, 21h, 21j, 21l, 21n) mêmes.

7. Ensemble de bande d'étanchéité et de montage (100, 100c-100h) selon l'une des revendications précédentes, **caractérisé en ce qu'**au moins un ruban insonorisant (8, 8a-8e) est disposé côté paroi et/ou côté bac sur la première région inférieure (4, 4a-4f).

8. Ensemble de bande d'étanchéité et de montage (100e) selon l'une des revendications précédentes, **caractérisé en ce que** la deuxième région supérieure (5e) du corps de base de bande d'étanchéité et de montage ou du matériau de support (1e) est chevauché côté bac par un ruban d'étanchéité supplémentaire (15).

9. Ensemble de bande d'étanchéité et de montage (100d, 100e, 100h) selon l'une des revendications précédentes, **caractérisé en ce que** l'ensemble de bande d'étanchéité et de montage (100d, 100e, 100h) comporte au moins un ruban de protection anti-coupure (14, 14a, 14b).

10. Ensemble de bande d'étanchéité et de montage (100c) selon l'une des revendications précédentes, **caractérisé en ce que** l'ensemble de bande d'étanchéité et de montage (100c) comporte au moins un ruban de protection capillaire (13).

11. Ensemble de bande d'étanchéité et de montage (100f) selon l'une des revendications précédentes, **caractérisé en ce que** l'ensemble de bande d'étanchéité et de montage (100f) comporte un ruban de protection horizontal (18), lequel peut être étendu ou collé sur une surface horizontale (19) de la retombée de bac (2f).

12. Ensemble de bande d'étanchéité et de montage (100g) selon l'une des revendications précédentes, **caractérisé en ce que** le film de revêtement (7g) est également disposé sur la première région inférieure (4g) et l'ensemble de bande d'étanchéité (100g) comporte au moins une deuxième couche de colle ou de butyle (22, 22a) dans la section transversale.

13. Procédé de pose d'un bac de douche ou d'une baignoire (3, 3a-3h) ou d'utilisation d'un ensemble de bande d'étanchéité et de montage (100, 100a-100h) selon l'une des revendications précédentes, avec un corps de base de bande d'étanchéité et de montage ou un matériau de support (1, 1a-1h) plastiquement extensible ou déformable et avec un film de revêtement (7, 7a-7h) également plastiquement extensible ou déformable, disposé au moins sur une deuxième région supérieure (5, 5a-5h) du corps de base de bande d'étanchéité et de montage ou du matériau de support (1, 1a-1h) côté bac ; **caractérisé en ce que** les étapes de procédé suivantes sont mises en œuvre :
a) retrait du premier ruban de papier siliconé d'une première région inférieure (4, 4a-4h) du corps de base de bande d'étanchéité et de montage ou du matériau de support (1, 1a-1h) ;
b) collage de la première région inférieure (4, 4a-4h) du corps de base de bande d'étanchéité et de montage ou du matériau de support (1, 1a-1h) sur une retombée de bac (2, 2a-2h) du bac de douche ou de la baignoire (3, 3a-3h) ;
c) pose du bac de douche ou de la baignoire (3, 3a-3h) dans un coin (E) formé par une première paroi de raccordement (6a) et une deuxième paroi de raccordement (6b) ou sur au moins un sol de raccordement ou sur au moins une transition de paroi ;
d) retrait d'un deuxième ruban de papier siliconé de la deuxième région supérieure (5, 5a-5h) à partir du corps de base de bande d'étanchéité et de montage ou du matériau de support (1, 1a-1h) ;
e) collage de la deuxième région supérieure (5, 5a-5h) du corps de base de bande d'étanchéité et de montage ou du matériau de support (1, 1a-1h) sur la première paroi de raccordement (6a) et sur la deuxième paroi de raccordement (6b) ou sur au moins un sol de raccordement ou sur au moins une transition de paroi ;
f) extension, déformation et application de la deuxième région supérieure (5, 5a-5h) du corps de base de bande d'étanchéité et de montage ou du matériau de support (1, 1a-1h) dans le coin (E) formé par la première paroi de raccordement (6a) et la deuxième paroi de raccordement (6b) ou sur le sol de raccordement ou une combinaison de ceux-ci ;
g) le cas échéant, application, ou encore le cas échéant collage d'un ruban de protection horizontal (18) sur une surface horizontale (19) de la retombée de bac (2f) ;
h) le cas échéant, retrait d'un troisième et d'un quatrième ruban de papier siliconé, à partir du côté arrière côté paroi d'un ruban d'étanchéité supplémentaire (15) ;
i) le cas échéant, collage d'un ruban d'étanchéité supplémentaire (15) de façon chevauchante sur la deuxième région supérieure (5, 5a-5h) du corps de base de bande d'étanchéité et de montage ou du matériau de support (1, 1a-1h) ;
j) pose d'un carrelage mural ou de panneaux de mur (11, 11a-11g) de façon chevauchante sur la deuxième région supérieure (5, 5a-5h) du corps de base de bande d'étanchéité et de montage ou du matériau de support (1, 1a-1h) ;
k) le cas échéant, arrachement du ruban de protection horizontal (18) au niveau d'une perforation longitudinale (20) ;
l) jointoiement avec un joint en silicone final (12, 12a-12f) entre le bord inférieur du carrelage mural ou des panneaux de mur (11, 11a-11g) et la retombée de bac (2, 2a-2h).

14. Utilisation d'un ensemble de bande d'étanchéité et de montage (100, 100a-100h) selon l'une des revendications précédentes pour la pose d'un élément à installer, en particulier un bac de douche, un jacuzzi ou une baignoire (3, 3a-3h), sur au moins une paroi de raccordement (61, 6a-6j) ou au moins un sol de raccordement (62), et pour l'étanchéification de transitions entre un élément à installer et des régions de coin de parois (61, 6a-6j) et/ou de sols de raccordement (62).
